(19) Europäisches Patentamt
European Patent Office
Office européen des brevets

(11) Veröffentlichungsnummer: **0 222 253 B1**

# (12) EUROPÄISCHE PATENTSCHRIFT

(45) Veröffentlichungstag der Patentschrift: **05.04.89**

(51) Int. Cl.⁴: **C07F 9/65,** A01N 57/08

(21) Anmeldenummer: **86114989.6**

(22) Anmeldetag: **28.10.86**

(54) **Substituierte 5-Amino-1-aryl-pyrazole.**

(30) Priorität: **09.11.85 DE 3539844**

(43) Veröffentlichungstag der Anmeldung:
**20.05.87 Patentblatt 87/21**

(45) Bekanntmachung des Hinweises auf die Patenterteilung:
**05.04.89 Patentblatt 89/14**

(84) Benannte Vertragsstaaten:
**AT BE CH DE ES FR GB IT LI NL SE**

(56) Entgegenhaltungen:
**EP-A- 0 037 497**
**EP-A- 0 139 182**
**EP-A- 0 154 115**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk(DE)**

(72) Erfinder: **Gehring, Reinhold, Dr., Dasnöckel 49, D-5600 Wuppertal 11(DE)**
Erfinder: **Lindig, Markus, Dr., Dahlienweg 16, D-4010 Hilden(DE)**
Erfinder: **Schallner, Otto, Dr., Noldeweg 22, D-4019 Monheim(DE)**
Erfinder: **Santel, Hans-Joachim, Dr., Grünstrasse 9a, D-5090 Leverkusen 1(DE)**
Erfinder: **Schmidt, Robert R., Dr., Im Waldwinkel 110, D-5060 Bergisch Gladbach 2(DE)**
Erfinder: **Stetter, Jörg, Dr., Gellertweg 4, D-5600 Wuppertal 1(DE)**

EP 0 222 253 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue substituierte 5-Amino-1-aryl-pyrazole, mehrere Verfahren zu ihrer Herstellung und ihre Verwendung als Herbizide.

Es ist bereits bekannt, daß bestimmte substituierte 5-Amino-1-aryl-pyrazole, wie beispielsweise das 4-Cyano-5-propionamido-1-(2,4,6-trichlorphenyl)-pyrazol, herbizide, insbesondere auch selektiv-herbizide Eigenschaften besitzen (vgl. z.B. DE-OS 3 226 513).

Die herbizide Wirksamkeit dieser vorbekannten 5-Amino-1-aryl-pyrazole gegenüber Unkräutern ist jedoch ebenso wie ihre Verträglichkeit gegenüber wichtigen Kulturpflanzen nicht immer in allen Anwendungsgebieten völlig zufriedenstellend.

Es wurden neue substituierte 5-Amino-1-aryl-pyrazole der allgemeinen Formel (I),

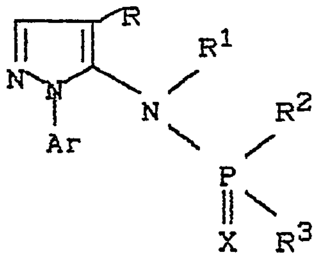

(I)

in welcher
R für Wasserstoff, Cyano, Nitro oder für geradkettiges oder verzweigtes Alkoxycarbonyl mit 1 bis 4 Kohlenstoffatomen steht,
$R^1$ für Wasserstoff oder für geradkettiges oder verzweigtes Alkyl mit 1 bis 6 Kohlenstoffatomen steht,
$R^2$ und $R^3$ unabhängig voneinander für jeweils geradkettiges oder verzweigtes Alkyl, Alkenyl oder Alkinyl mit jeweils bis zu 8 Kohlenstoffatomen, für geradkettiges oder verzweigtes Halogenalkyl mit 1 bis 6 Kohlenstoffatomen und 1 bis 13 gleichen oder verschiedenen Halogenatomen, für geradkettiges oder verzweigtes Alkoxyalkyl mit jeweils 1 bis 4 Kohlenstoffatomen in den einzelnen Alkylteilen, für geradkettiges oder verzweigtes Alkoxy mit 1 bis 6 Kohlenstoffatomen, für Cycloalkyl oder Cycloalkyloxy mit jeweils 3 bis 7 Kohlenstoffatomen oder für jeweils gegebenenfalls im Arylteil einfach oder mehrfach, gleich oder verschieden substituiertes Aryl, Aryloxy, Aralkyl oder Aralkyloxy mit jeweils 6 bis 10 Kohlenstoffatomen in den einzelnen Arylteilen und gegebenenfalls ein bis drei Kohlenstoffatomen in den geradkettigen oder verzweigten Alkylteilen stehen, wobei als Arylsubstituenten jeweils in Frage kommen: Halogen, Cyano, Nitro sowie jeweils geradkettiges oder verzweigtes Alkyl, Alkoxy, Alkylthio oder Halogenalkyl mit jeweils 1 bis 4 Kohlenstoffatomen und im Fall des Halogenalkyl mit 1 bis 9 gleichen oder verschiedenen Halogenatomen,
X für Sauerstoff oder Schwefel steht und
Ar für jeweils gegebenenfalls einfach oder mehrfach, gleich oder verschieden substituiertes Phenyl, 2-Pyridyl, 3-Pyridyl oder 4-Pyridyl steht, wobei als Substituenten jeweils in Frage kommen: Cyano, Nitro, Halogen, jeweils geradkettiges oder verzweigtes Alkyl, Alkoxy oder Alkoxycarbonyl mit jeweils 1 bis 4 Kohlenstoffatomen im Alkylteil, jeweils geradkettiges oder verzweigtes Halogenalkyl oder Halogenalkoxy mit jeweils 1 bis 4 Kohlenstoffatomen und 1 bis 9 gleichen oder verschiedenen Halogenatomen oder der Rest $-S(O)_n-R^4$, wobei
$R^4$ für Amino, für jeweils geradkettiges oder verzweigtes Alkyl, Alkylamino, Dialkylamino oder Halogenalkyl mit jeweils 1 bis 4 Kohlenstoffatomen in den einzelnen Alkylteilen und im Fall des Halogenalkyl mit 1 bis 9 gleichen oder verschiedenen Halogenatomen steht und n für eine Zahl 0, 1 oder 2 steht, gefunden.

Gegenstand der vorliegenden Erfindung sind auch die Alkalimetallsalze von 5-Amino-1-aryl-pyrazolen der Formel (I).

Weiterhin wurde gefunden, daß man die neuen substituierten 5-Amino-1-aryl-pyrazole der allgemeinen Formel (I),

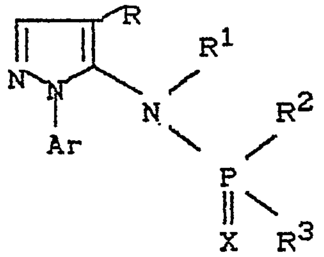

(I)

in welcher
R für Wasserstoff, Cyano, Nitro oder für geradkettiges oder verzweigtes Alkoxycarbonyl mit 1 bis 4

Kohlenstoffatomen steht,
$R^1$ für Wasserstoff oder für geradkettiges oder verzweigtes Alkyl mit 1 bis 6 Kohlenstoffatomen steht,
$R^2$ und $R^3$ unabhängig voneinander für jeweils geradkettiges oder verzweigtes Alkyl, Alkenyl oder Alkinyl mit jeweils bis zu 8 Kohlenstoffatomen, für geradkettiges oder verzweigtes Halogenalkyl mit 1 bis 6 Kohlenstoffatomen und 1 bis 13 gleichen oder verschiedenen Halogenatomen, für geradkettiges oder verzweigtes Alkoxyalkyl mit jeweils 1 bis 4 Kohlenstoffatomen in den einzelnen Alkylteilen, für geradkettiges oder verzweigtes Alkoxy mit 1 bis 6 Kohlenstoffatomen, für Cycloalkyl oder Cycloalkyloxy mit jeweils 3 bis 7 Kohlenstoffatomen oder für jeweils gegebenenfalls im Arylteil einfach oder mehrfach, gleich oder verschieden substituiertes Aryl, Aryloxy, Aralkyl oder Aralkyloxy mit jeweils 6 bis 10 Kohlenstoffatomen in den einzelnen Arylteilen und gegebenenfalls ein bis drei Kohlenstoffatomen in den geradkettigen oder verzweigten Alkylteilen stehen, wobei als Arylsubstituenten jeweils in Frage kommen: Halogen, Cyano, Nitro sowie jeweils geradkettiges oder verzweigtes Alkyl, Alkoxy, Alkylthio oder Halogenalkyl mit jeweils 1 bis 4 Kohlenstoffatomen und im Fall des Halogenalkyl mit 1 bis 9 gleichen oder verschiedenen Halogenatomen,
X für Sauerstoff oder Schwefel steht und
Ar für jeweils gegebenenfalls einfach oder mehrfach, gleich oder verschieden substituiertes Phenyl, 2-Pyridyl, 3-Pyridyl oder 4-Pyridyl steht, wobei als Substituenten jeweils in Frage kommen: Cyano, Nitro, Halogen, jeweils geradkettiges oder verzweigtes Alkyl, Alkoxy oder Alkoxycarbonyl mit jeweils 1 bis 4 Kohlenstoffatomen im Alkylteil jeweils geradkettiges oder verzweigtes Halogenalkyl oder Halogenalkoxy mit jeweils 1 bis 4 Kohlenstoffatomen und 1 bis 9 gleichen oder verschiedenen Halogenatomen oder der Rest $-S(O)_n-R^4$, wobei
$R^4$ für Amino, für jeweils geradkettiges oder verzweigtes Alkyl, Alkylamino, Dialkylamino oder Halogenalkyl mit jeweils 1 bis 4 Kohlenstoffatomen in den einzelnen Alkylteilen und im Fall des Halogenalkyl mit 1 bis 9 gleichen oder verschiedenen Halogenatomen steht und
n für eine Zahl 0, 1 oder 2 steht,
nach einem der im folgenden beschriebenen Verfahren erhält:
(A) Man erhält die substituierten 5-Amino-1-aryl-pyrazole der Formel (I),

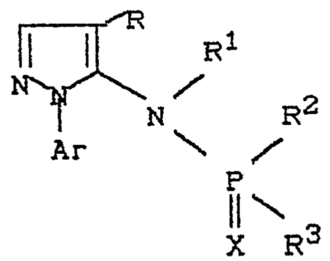

(I)

in welcher
R, $R^1$, $R^2$, $R^3$, X und Ar die oben angegebene Bedeutung haben,
wenn man 5-Amino-1-aryl-pyrazole der Formel (II),

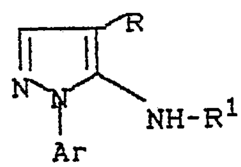

(II)

in welcher
R, $R^1$ und Ar die oben angegebene Bedeutung haben, mit Phosphorhalogenid-Verbindungen der Formel (III),

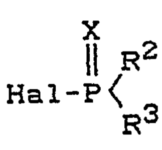

(III)

in welcher
$R^2$, $R^3$ und X die oben angegebene Bedeutung haben und
Hal für Halogen steht,
gegebenenfalls in Gegenwart eines Verdünnungsmittels und gegebenenfalls in Gegenwart eines Säurebindemittels umsetzt;

(B) man erhält substituierte 5-Amino-1-aryl-pyrazole der Formel (Ia);

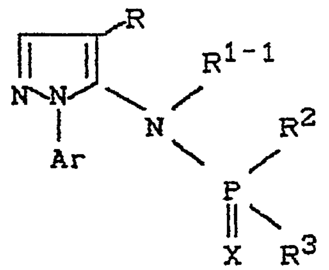

(Ia)

in welcher

R, $R^2$, $R^3$, X und Ar die oben angegebene Bedeutung haben und

$R^{1-1}$ für geradkettiges oder verzweigtes Alkyl mit 1 bis 6 Kohlenstoffatomen steht, alternativ, wenn man die nach Verfahren (A) erhältlichen substituierten 5-Amino-1-aryl-pyrazole der Formel (Ib),

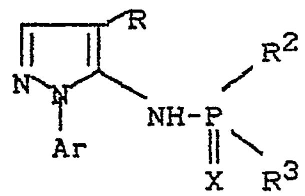

(Ib)

in welcher

R, $R^2$, $R^3$, X und Ar die oben angegebene Bedeutung haben, mit Alkylierungsmitteln der Formel (IV),

$R^{1-1}$–A (IV)

in welcher

$R^{1-1}$ für geradkettiges oder verzweigtes Alkyl mit 1 bis 6 Kohlenstoffatomen steht und

A für Halogen oder für jeweils gegebenenfalls substituiertes Alkylsulfonyloxy, Alkoxysulfonyloxy oder Arylsulfonyloxy steht, gegebenenfalls in Gegenwart eines Verdünnungsmittels, gegebenenfalls in Gegenwart eines Säurebindemittels und gegebenenfalls in Gegenwart eines Katalysators umsetzt;

(C) man erhält 4-Nitro-1-aryl-pyrazole der Formel (Ic)

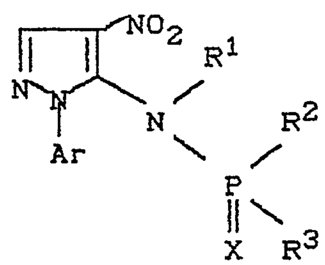

(Ic)

in welcher

$R^1$, $R^2$, $R^3$, X und Ar die oben angegebene Bedeutung haben,

wenn man die nach Verfahren (A) oder (B) erhältlichen in 4-Stellung unsubstituierten 1-Aryl-pyrazole der Formel (Id),

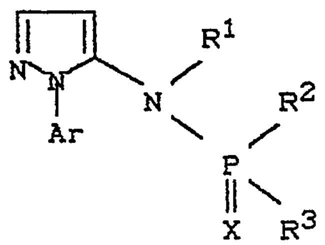

(Id)

in welcher

$R^1$, $R^2$, $R^3$, X und Ar die oben angegebene Bedeutung haben,

mit Salpetersäure gegebenenfalls in Gegenwart eines Verdünnungsmittels und gegebenenfalls in Gegenwart eines Katalysators umsetzt.

Man erhält die Alkalimetallsalze, wenn man 5-Amino-1-aryl-pyrazole der Formel (I), in denen $R^1$ für Wasserstoff steht, in üblicher und allgemein bekannter Weise mit einem anorganischen Alkalimetallsalz, z.B. Natriumchlorid, versetzt.

Schließlich wurde gefunden, daß die neuen substituierten 5-Amino-1-aryl-pyrazole der Formel (I) herbizide, insbesondere auch selektiv-herbizide Eigenschaften besitzen.

Überraschenderweise zeigen die erfindungsgemäßen substituierten 5-Amino-1-aryl-pyrazole der allgemeinen Formel (I) eine deutlich bessere allgemein-herbizide Wirksamkeit gegenüber Unkräutern und darüber hinaus auch eine erhebliche größere Verträglichkeit gegenüber wichtigen Kulturpflanzen als die aus dem Stand der Technik bekannt 5-Amino-1-aryl-pyrazole, wie beispielsweise das 4-Cyano-5-propionamido-1-(2,4,6-trichlorphenyl)-pyrazol, welches chemisch und wirkungsmäßig naheliegende Verbindungen sind.

Die erfindungsgemäßen substituierten 5-Amino-1-aryl-pyrazole sind durch die Formel (I) allgemein definiert. Bevorzugt sind Verbindungen der Formel (I), bei welchen

R für Wasserstoff, Cyano, Nitro, Methoxycarbonyl oder Ethoxycarbonyl steht,

$R^1$ für Wasserstoff, Methyl, Ethyl, n- oder i-Propyl, sowie n-, i- oder s-Butyl steht,

$R^2$ und $R^3$ unabhängig voneinander jeweils für Methyl, Ethyl, n-oder i-Propyl, n-, i-, s- oder t-Butyl, Allyl, Propargyl, Chlormethyl, Dichlormethyl, Trichlormethyl, Fluormethyl, Dichlorfluormethyl, Trifluormethyl, Dichlorfluormethyl, Difluorchlormethyl, Chlorethyl, Trichlorethyl, Pentachlorethyl, Trifluorethyl, Pentafluorethyl, Bromethyl, Methoxymethyl, Methoxyethyl, Ethoxymethyl, Ethoxyethyl, n-Propoxymethyl, i-Propoxymethyl, n-Propoxyethyl, i-Propoxyethyl, Methoxy, Ethoxy, n- oder i-Propoxy, n-, i-, s- oder t-Butoxy, Cyclopropyl, Cyclopentyl, Cyclohexyl, Cyclohexyloxy oder für jeweils gegebenenfalls ein- bis fünffach gleich oder verschieden substituiertes Benzyl, Benzyloxy, Phenyl oder Phenoxy stehen, wobei als Arylsubstituenten jeweils in Frage kommen: Fluor, Chlor, Brom, Cyano, Nitro, Methyl, Ethyl, Methoxy, Methylthio oder Trifluormethyl,

X für Sauerstoff oder Schwefel steht und

Ar für gegenbenenfalls ein- bis fünffach, gleich oder verschieden substituiertes Phenyl oder für gegebenenfalls ein- bis vierfach, gleich oder verschieden substituiertes 2-Pyridyl steht, wobei als Substituenten jeweils in Frage kommen: Cyano, Nitro, Fluor, Chlor, Brom, Iod, Methyl, Ethyl, n- und i-Propyl, n-, i-, s- und t-Butyl, Methoxy, Ethoxy, Methoxycarbonyl, Ethoxycarbonyl, Trifluormethyl, Trichlormethyl, Dichlorfluormethyl, Difluorchlormethyl, Chlormethyl, Dichlormethyl, Difluormethyl, Pentafluorethyl, Tetrafluorethyl, Trifluorchlorethyl, Trifluorethyl, Difluordichlorethyl, Trifluordichlorethyl, Pentachlorethyl, Trifluormethoxy, Trichlormethoxy, Dichlorfluormethoxy, Difluorchlormethoxy, Chlormethoxy, Dichlormethoxy, Difluormethoxy, Pentafluorethoxy, Tetrafluorethoxy, Trifluorchlorethoxy, Trifluorethoxy, Difluordichlorethoxy, Trifluordichlorethoxy, Pentachlorethoxy oder der Rest $-S(O)_n-R^4$, wobei

$R^4$ für Amino, Methylamino, Ethylamino, Dimethylamino, Diethylamino, Fluordichlormethyl, Difluormethyl, Tetrafluorethyl, Trichlorethyl, Trifluormethyl, Methyl oder Ethyl steht und

n für eine Zahl 0, 1 oder 2 steht.

Im einzelnen seien außer den bei den Herstellungsbeispielen genannten Verbindungen die folgenden substituierten 5-Amino-1-aryl-pyrazole der allgemeinen Formel (I) genannt:

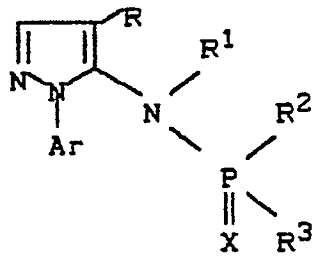

(I)

Tabelle 1

| R | $R^1$ | $R^2$ | $R^3$ | X | Ar |
|---|---|---|---|---|---|
| $NO_2$ | H | $CH_3$ | $CH_3$ | O | 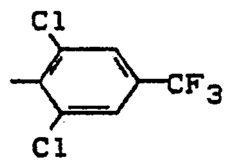 |
| $NO_2$ | H | $CH_3$ | $CH_3$ | O | 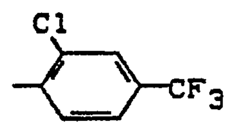 |
| $NO_2$ | H | $C_2H_5$ | $C_2H_5$ | O | 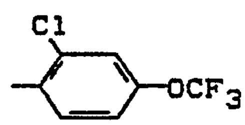 |
| $NO_2$ | H | $CH_3$ | $-CH_2Cl$ | S | 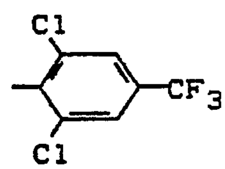 |

Tabelle 1 (Fortsetzung)

| R | $R^1$ | $R^2$ | $R^3$ | X | Ar |
|---|---|---|---|---|---|
| $NO_2$ | H | $-OCH_3$ | $CH_3$ | O | 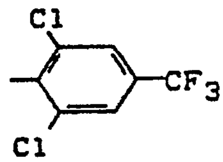 |
| $NO_2$ | H | 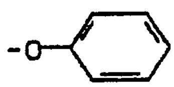 | $CH_3$ | O | 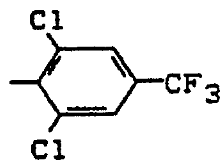 |
| $NO_2$ | $CH_3$ | 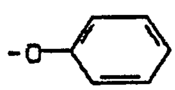 | $CH_3$ | O | 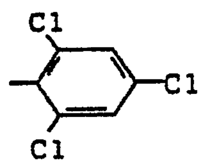 |
| $NO_2$ | H | $-OCH_3$ | $-OCH_3$ | O | 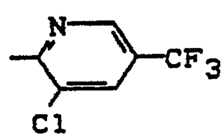 |
| $NO_2$ | H | $CH_3$ | $-CH_3$ | O | 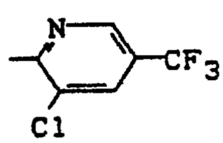 |
| $NO_2$ | $CH_3$ | $-OC_2H_5$ | $-OC_2H_5$ | O | 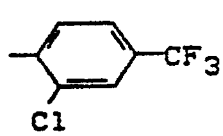 |

Tabelle 1 (Fortsetzung)

| R | $R^1$ | $R^2$ | $R^3$ | X | Ar |
|---|---|---|---|---|---|
| $NO_2$ | H | $CH_3$ | $CH_3$ | O | 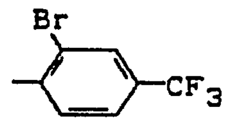 |
| $NO_2$ | H | $CH_3$ | $-OC_2H_5$ | S | 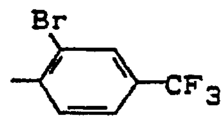 |
| $NO_2$ | H | $CH_3$ | 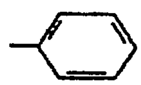 | O | 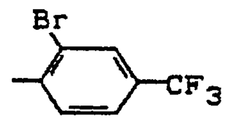 |
| $NO_2$ | H | $-OC_2H_5$ | $-OC_2H_5$ | O | 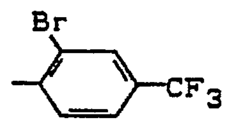 |
| $NO_2$ | H | $CH_3$ | $-OC_2H_5$ | S | 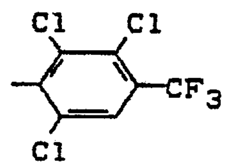 |
| $NO_2$ | H | 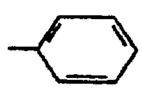 | 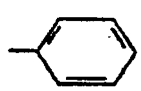 | O | 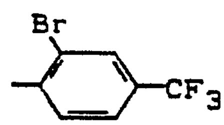 |
| $NO_2$ | H | $CH_3$ | $-OC_2H_5$ | O | 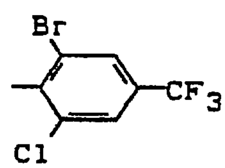 |

Tabelle 1 (Fortsetzung)

| R | $R^1$ | $R^2$ | $R^3$ | X | Ar |
|---|---|---|---|---|---|
| $NO_2$ | H | $-OC_2H_5$ | $-OC_2H_5$ | S | 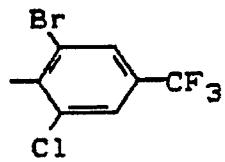 |
| $NO_2$ | H | 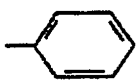 | $CH_3$ | O | 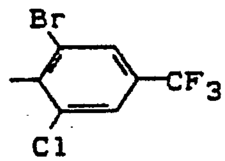 |
| $NO_2$ | H | 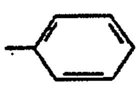 | 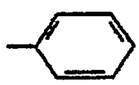 | O | 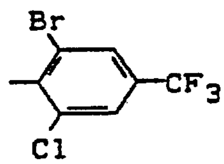 |
| CN | H | $C_2H_5$ | $-OCH_3$ | O | 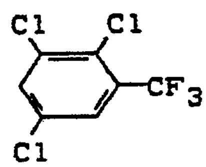 |
| CN | H | $CH_3$ | 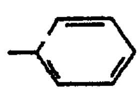 | O | 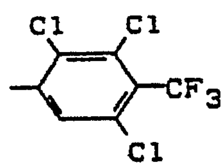 |
| CN | H | $CH_3$ | 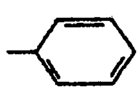 | O | 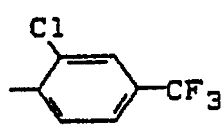 |

<u>Tabelle 1</u> (Fortsetzung)

| R | $R^1$ | $R^2$ | $R^3$ | X | Ar |
|---|---|---|---|---|---|
| CN | H | $CH_3$ | $-OC_2H_5$ | O | 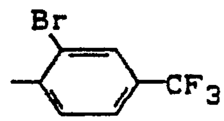 |
| CN | H | $CH_3$ | $-OCH_3$ | S | 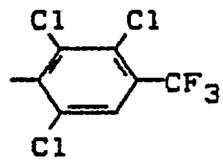 |
| CN | H | $CH_3$ | 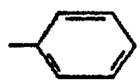 | O | 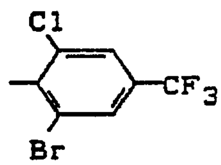 |
| CN | H | 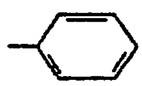 | 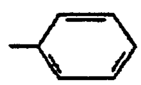 | O | 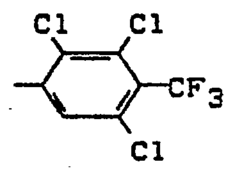 |
| CN | H | $CH_3$ | 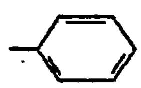 | O | 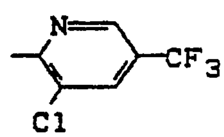 |
| CN | H | $-OC_2H_5$ | $-OC_2H_5$ | S | 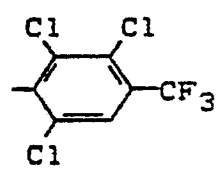 |

Verwendet man beispielsweise 5-Amino-4-cyano-1-(2,6-dichlor-4-trifluormethylphenyl)-pyrazol und O,O-Diethylthiophosphorylchlorid als Ausgangsstoffe, so läßt sich der Reaktionsablauf des erfindungsgemäßen Verfahrens (A) durch das folgende Formelschema darstellen:

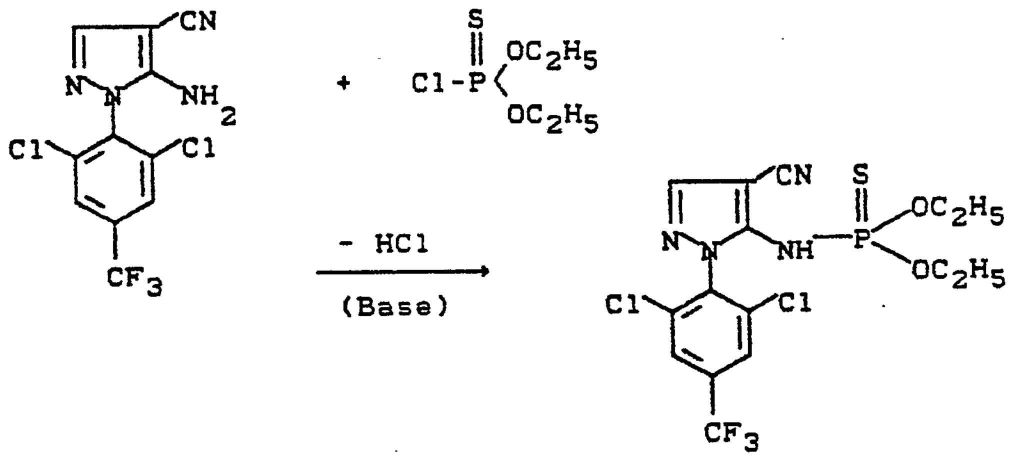


Verwendet man beispielsweise 5-(O,O-Diethyl-phosphorylamino)-4-nitro-1-(2,6-dichlor-4-trifluormethyl-phenyl)-pyrazol und Methyliodid als Ausgangsstoffe, so läßt sich der Reaktionsablauf des erfindungsgemäßen Verfahrens (B) durch das folgende Formelschema darstellen:

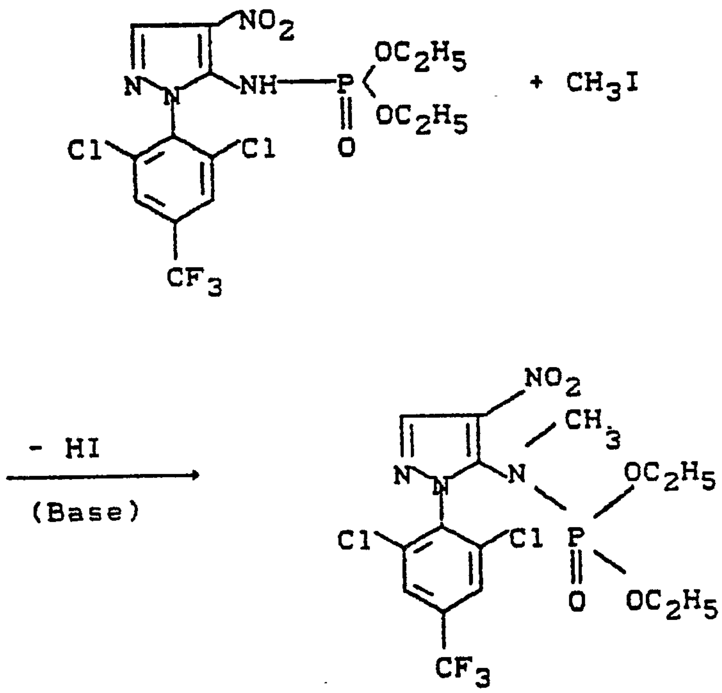


Verwendet man beispielsweise 5-[N-Methyl-N-(O,O-diethylphosphoryl)-amino]-1-(2,4,6-trichlorphenyl)-pyrazol und Salpetersäure als Ausgangsstoffe, so läßt sich der Reaktionsablauf des erfindungsgemäßen Verfahrens (C) durch das folgende Formelschema darstellen:

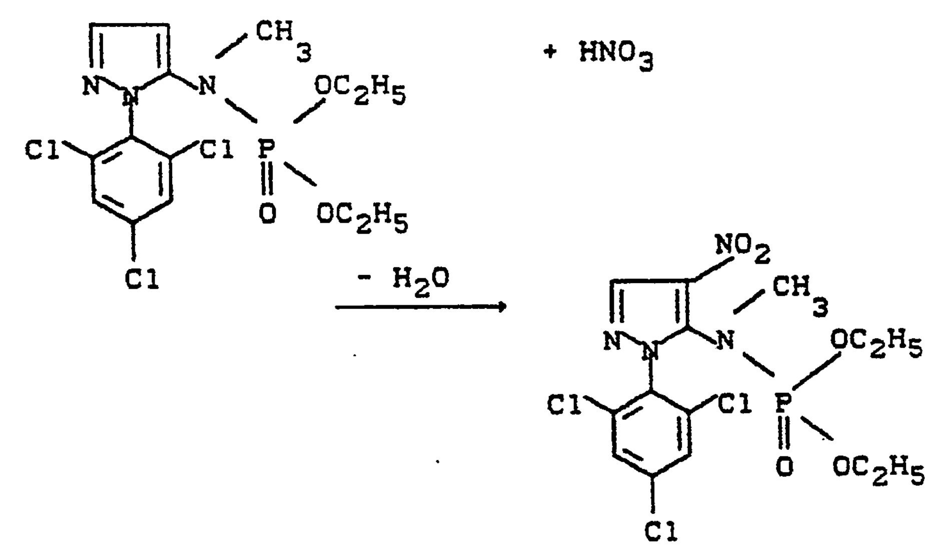


Die zur Durchführung des erfindungsgemäßen Verfahrens (A) als Ausgangsstoffe benötigten 5-Amino-1-aryl-pyrazole sind durch die Formel (II) allgemein definiert. In dieser Formel (II) stehen R, $R^1$ und Ar vorzugsweise für diejenigen Reste, die bereits im Zusammenhang mit der Beschreibung der erfindungsgemäßen Stoffe der Formel (I) als bevorzugt für diese Substituenten genannt wurden.

Die 5-Amino-1-aryl-pyrazole der Formel (II) sind teilweise bekannt (vgl. z.B. EP-OS 26 034, EP-OS 34 945, EP-OS 53 678, DE-OS 3 226 496, DE-OS 3 226 513, DE-OS 3 129 429, DE-OS 3 325 488, DE-OS 3 408 727, DE-OS 3 420 985 und DE-OS 3 402 308); teilweise sind sie Gegenstand eigener noch nicht vorveröffentlichter Patentanmeldungen (vgl. z.B. DE-P 3 426 424 vom 18.7.1984, DE-P 3 520 330 vom 7.6.1985 und DE-P 3 520 327 vom 7.6.1985 und sind erhältlich in Analogie zu bekannten Verfahren.

Die zur Durchführung des erfindungsgemäßen Verfahrens (A) weiterhin als Ausgangsstoffe benötigten Phosphorhalogenid-Verbindungen sind durch die Formel (III) allgemein definiert. In dieser Formel (III) stehen $R^2$, $R^3$ und X vorzugsweise für diejenigen Reste, die bereits im Zusammenhang mit der Beschreibung der erfindungsgemäßen Stoffe der Formel (I) als bevorzugt für diese Substituenten genannt wurden.

Hal steht vorzugsweise für Chlor oder Brom. Die Phosphorhalogenid-Verbindungen der Formel (III) sind allgemein bekannte Verbindungen der organischen Chemie.

Die zur Durchführung des erfindungsgemäßen Verfahrens (B) als Ausgangsstoffe benötigten substituierten 5-Amino-1-aryl-pyrazole sind durch die Formel (Ib) allgemein definiert. In dieser Formel (Ib) stehen R, $R^2$, $R^3$, Ar und X vorzugsweise für diejenigen Reste, die bereits im Zusammenhang mit der Beschreibung der erfindungsgemäßen Stoffe der Formel (I) als bevorzugt für diese Substituenten genannt wurden.

Die substituierten 5-Amino-1-aryl-pyrazole der Formel (Ib) sind erfindungsgemäße Verbindungen und erhältlich mit Hilfe der erfindungsgemäßen Verfahren (A) und (C).

Die zur Durchführung des erfindungsgemäßen Verfahrens (B) weiterhin als Ausgangsstoffe benötigten Alkylierungsmittel sind durch die Formel (IV) allgemein definiert. In dieser Formel (IV) steht $R^{1-1}$ vorzugsweise für diejenigen Reste, die bereits im Zusammenhang mit der Beschreibung der erfindungsgemäßen Stoffe der Formel (I) als bevorzugt für den Substituenten $R^1$ genannt wurden, mit Ausnahme des Wasserstoffrestes.

A steht vorzugsweise für Chlor, Brom oder Iod für Methansulfonyloxy, Methoxysulfonyloxy oder p-Toluolsulfonyloxy.

Die Alkylierungsmittel der Formel (IV) sind allgemein bekannte Verbindungen der organischen Chemie.

Die zur Durchführung des erfindungsgemäßen Verfahrens (C) als Ausgangsstoffe benötigten in 4-Stellung unsubstituierten 1-Aryl-pyrazole sind durch die Formel (Id) allgemein definiert. In dieser Formel (Id) stehen $R^1$, $R^2$, $R^3$, Ar und X vorzugsweise für diejenigen Reste, die bereits im Zusammenhang mit der Beschreibung der erfindungsgemäßen Stoffe der Formel (I) als bevorzugt für diese Substituenten genannt wurden.

Die in 4-Stellung unsubstituierten 1-Aryl-pyrazole der Formel (Id) sind erfindungsgemäße Verbindungen und erhältlich mit Hilfe der erfindungsgemäßen Verfahren (A) und (B).

Als Verdünnungsmittel zur Durchführung des erfindungsgemäßen Verfahrens (A) kommen inerte organische Lösungsmittel in Frage.

Hierzu gehören insbesondere aliphatische oder aromatische, gegebenenfalls halogenierte Kohlenwasserstoffe, wie beispielsweise Benzin, Benzol, Toluol, Xylol, Chlorbenzol, Petrolether, Hexan, Cyclohexan, Dichlormethan, Chloroform, Tetrachlorkohlenstoff, Ether, wie Diethylether, Dioxan, Tetrahydrofuran oder Ethylenglykoldimethyl- oder diethylether, Ketone wie Aceton oder Butanon, Nitrile, wie

Acetonitril oder Propionitril, Amide, wie Dimethylformamid, Dimethylacetamid, N-Methylformanilid, N-Methylpyrrolidon oder Hexamethylphosphorsäuretriamid, Ester, wie Essigsäureethylester oder Sulfoxide, wie Dimethylsulfoxid.

Das erfindungsgemäße Verfahren (A) wird vorzugsweise in Gegenwart eines geeigneten Säurebindemittels durchgeführt.

Als solche kommen alle üblichen anorganischen oder organischen Basen in Frage. Hierzu gehören beispielsweise Alkalimetallhydroxide, -hydride oder -amide, wie Natriumhydroxid oder Kaliumhydroxid, Natriumhydrid oder Natriumamid, Alkalimetallcarbonate oder -alkoholate, wie Natriummethylat oder -ethylat, tertiäre Amine, wie Triethylamin, N,N-Dimethylanilin, Pyridin, N,N-Dimethylaminopyridin, Diazabicyclooctan (DABCO), Diazabicyclononen (DBN) oder Diazabicycloundecen (DBU).

Verwendet man als Säurebindemittel ein Amin in flüssiger Form, so ist es auch möglich, dieses in entsprechendem Überschuß gleichzeitig als Verdünnungsmittel einzusetzen. Die Zugabe von anderen Verdünnungsmitteln kann sich in diesem Fall erübrigen.

Die Reaktionstemperaturen können bei der Durchführung des erfindungsgemäßen Verfahrens (A) in einem größeren Bereich variiert werden. Im allgemeinen arbeitet man bei Temperaturen zwischen −80°C und +120°C, vorzugsweise bei Temperaturen zwischen −70°C und +70°C.

Zur Durchführung des erfindungsgemäßen Verfahrens (A) setzt man pro Mol an 5-Amino-1-aryl-pyrazol der Formel (II) im allgemeinen 1,0 bis 3,0 Mol, vorzugsweise 1,0 bis 2,0 Mol an Phosphorhalogenid-Verbindung der Formel (III) und 1,0 bis 3,0 Mol, vorzugsweise 1,0 bis 2,0 Mol an Säurebindemittel ein. Die Reaktionsdurchführung, Aufarbeitung und Isolierung der Reaktionsprodukte der Formel (I) erfolgen nach allgemein bekannten Verfahren.

Als Verdünnungsmittel zur Durchführung des erfindungsgemäßen Verfahrens (B) kommen ebenfalls inerte organische Lösungsmittel in Frage.

Hierzu gehören insbesondere aliphatische oder aromatische Kohlenwasserstoffe wie beispielsweise Benzin, Benzol, Toluol, Xylol, Petrolether, Hexan, Cyclohexan, Ether, wie Diethylether, Dioxan, Tetrahydrofuran oder Ethylenglykoldimethyl- oder diethylether, Ketone wie Aceton oder Butanon, Nitrile wie Acetonitril oder Propionitril, Amide wie Dimethylformamid, Dimethylacetamid, N-Methylformanilid, N-Methylpyrrolidon oder Hexamethylphosphorsäuretriamid oder Ester wie Essigsäureethylester.

Das erfindungsgemäße Verfahren (B) kann gegebenenfalls auch in einem Zweiphasensystem, wie beispielsweise Wasser/Toluol oder Wasser/Dichlormethan, gegebenenfalls in Gegenwart eines Phasentransferkatalysators, durchgeführt werden. Als Beispiele für solche Katalysatoren seien genannt: Tetrabutylammoniumiodid, Tetrabutylammoniumbromid, Tributyl-methylphosphoniumbromid, Trimethyl-$C_{13}/C_{15}$-alkylammoniumchlorid, Dibenzyl-ammoniummethylsulfat, Dimethyl-$C_{12}/C_{14}$-alkyl-benzylammoniumchlorid, Tetrabutylammoniumhydroxid, 15-Krone-5, 18-Krone-6, Triethylbenzylammoniumchlorid, Trimethylbenzylammoniumchlorid.

Als Säurebindemittel zur Durchführung des erfindungsgemäßen Verfahrens (B) kommen alle üblicherweise verwendbaren anorganischen und organischen Basen in Frage. Vorzugsweise verwendet man Alkalimetallhydride, -hydroxide, -amide, carbonate oder -hydrogencarbonate, wie beispielsweise Natriumhydrid, Natriumamid, Natriumhydroxid, Natriumcarbonat oder Natriumhydrogencarbonat oder auch tertiäre Amine, wie beispielsweise Triethylamin, N,N-Dimethylanilin, Pyridin, 4-(N,N-Dimethylamino)-pyridin, Diazabicyclooctan (DABCO), Diazabicyclononen (DBN) oder Diazabicycloundecen (DBU).

Die Reaktionstemperaturen können bei der Durchführung des erfindungsgemäßen Verfahrens (B) in einem größeren Bereich variiert werden. Im allgemeinen arbeitet man bei Temperaturen zwischen −20°C und +150°C, vorzugsweise bei Temperaturen zwischen 0°C und 100°C.

Zur Durchführung des erfindungsgemäßen Verfahrens (B) setzt man pro Mol an substituierten 5-Amino-1-aryl-pyrazol der Formel (Ib) im allgemeinen 1,0 bis 50,0 Mol, vorzugsweise 1,0 bis 25,0 Mol an Alkylierungsmittel der Formel (IV) und gegebenenfalls 1,0 bis 50,0 Mol an Säurebindemittel sowie gegebenenfalls 0,01 bis 1,0 Mol an Phasentransferkatalysator ein. Die Reaktionsdurchführung, Aufarbeitung und Isolierung der Reaktionsprodukte der Formel (Ia) erfolgt nach allgemein bekannten Verfahren.

Als Verdünnungsmittel zur Durchführung des erfindungsgemäßen Verfahrens (C) kommen alle üblicherweise für derartige Nitrierungsreaktionen verwendbaren Lösungsmittel in Frage. Vorzugsweise verwendet man die als Reagenzien in Frage kommenden Säuren oder deren Gemische mit Katalysatorsäure, wie beispielsweise Schwefelsäure, Salpetersäure, Acetanhydrid oder Nitriersäure, gleichzeitig als Verdünnungsmittel. Es kommen gegebenenfalls auch inerte organische Lösungsmittel, wie beispielsweise Eisessig oder chlorierte Kohlenwasserstoffe, wie Methylenchlorid, Chloroform oder Tetrachlorkohlenstoff als Verdünnungsmittel in Frage.

Als Katalysatoren oder Reaktionshilfsmittel zur Durchführung des erfindungsgemäßen Verfahrens (C) kommen ebenfalls die für derartige Nitrierungen üblichen Katalysatoren in Frage; vorzugsweise verwendet man saure Katalysatoren, wie beispielsweise Schwefelsäure oder Acetanhydrid.

Die Reaktionstemperaturen können bei der Durchführung des erfindungsgemäßen Verfahrens (C) in einem größeren Bereich variiert werden. Im allgemeinen arbeitet man zwischen −50°C und +20°C, vorzugsweise zwischen −20°C und +150°C.

Zur Durchführung des erfindungsgemäßen Verfahrens (C) setzt man pro Mol in 4-Stellung unsubstituiertem 1-Aryl-pyrazol der Formel (Id) im allgemeinen 1,0 bis 100 Mol, vorzugsweise 1,0 bis 50 Mol an Salpetersäure und gegebenenfalls 0,1 bis 10 Mol an Katalysator ein.

Die Reaktionsführung, Aufarbeitung und Isolierung der Reaktionsprodukte der Formel (Ic) erfolgt in allgemein üblicher Art und Weise.

Die erfindungsgemäßen Wirkstoffe können als Defoliants, Desiccants, Krautabtötungsmittel und insbesondere als Unkrautvernichtungsmittel verwendet werden. Unter Unkraut im weitesten Sinne sind alle Pflanzen zu verstehen, die an Orten aufwachsen, wo sie unerwünscht sind. Ob die erfindungsgemäßen Stoffe als totale oder selektive Herbizide wirken, hängt im wesentlichen von der angewendeten Menge ab.

Die erfindungsgemäßen Wirkstoffe können z.B. bei den folgenden Pflanzen verwendet werden:

<u>Dikotyle Unkräuter der Gattungen:</u> Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea.

<u>Dikotyle Kulturen der Gattungen:</u> Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cucurbita.

<u>Monokotyle Unkräuter der Gattungen:</u> Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

<u>Monokotyle Kulturen der Gattungen:</u> Oryza, Zea, Triticum, Hordeum, Avena, Secale, Sorghum, Panicum, Saccharum, Ananas, Asparagus, Allium.

Die Verwendung der erfindungsgemäßen Wirkstoffe ist jedoch keineswegs auf diese Gattungen beschränkt, sondern erstreckt sich in gleicher Weise auch auf andere Pflanzen.

Die Verbindungen eignen sich in Abhängigkeit von der Konzentration zur Totalunkrautbekämpfung z.B. auf Industrie- und Gleisanlagen und auf Wegen und Plätzen mit und ohne Baumbewuchs. Ebenso können die Verbindungen zur Unkrautbekämpfung in Dauerkulturen, z.B. Forst, Ziergehölz-, Obst-, Wein-, Citrus-, Nuß-, Bananen-, Kaffee-, Tee-, Gummi-, Ölpalm-, Kakao-, Beerenfrucht- und Hopfenanlagen und zur selektiven Unkrautbekämpfung in einjährigen Kulturen eingesetzt werden.

Dabei lassen sich die erfindungsgemäßen Wirkstoffe mit besonders gutem Erfolg zur selektiven Bekämpfung von dikotylen Unkräutern in mono- und dikotylen Kulturen wie beispielsweise Weizen, Gerste oder Baumwolle einsetzen.

Darüber hinaus besitzen die erfindungsgemäßen Wirkstoffe auch wachstumsregulierende Wirksamkeit. In entsprechenden Aufwandmengen zeigen die erfindungsgemäßen Wirkstoffe auch fungizide Wirksamkeit und lassen sich beispielsweise zur Bekämpfung von Reiskrankheiten wie z.B. gegen den Erreger der Reisfleckenkrankheit (Pyricularia oryzae) einsetzen.

Die Wirkstoffe können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur und synthetische Stoffe sowie Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

Z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die erfindungsgemäßen Wirkstoffe können als solche oder in ihren Formulierungen auch in Mischung mit bekannten Herbiziden zur Unkrautbekämpfung Verwendung finden, wobei Fertigformulierungen oder Tankmischungen möglich sind.

Für die Mischungen kommen bekannte Herbizide wie z.B. 1-Amino-6-ethylthio-3-(2,2-dimethylpropyl)-1,3,5-triazin-2,4(1H,3H)-dion oder N-(2-Benzthiazolyl-N,N'-dimethylharnstoff zur Unkrautbekämpfung in Getreide; 4-Amino-3-methyl-6-phenyl-1,2,4-triazin-5(4H)-on zur Unkrautbekämpfung in Zuckerrüben und 4-Amino-6-(1,1-dimethylethyl)-3-methylthio-1,2,4-triazin-5(4H)-on zur Unkrautbekämpfung in Sojabohnen, in Frage.

Auch Mischungen mit
N,N-Dimethyl-N'-(3-trifluormethylphenyl)-harnstoff;
N,N-Dimethyl-N'-(3-chlor-4-methylphenyl)-harnstoff;
N,N-Dimethyl-N'-(4-isopropylphenyl)-harnstoff;
4-Amino-6-t-butyl-3-ethylthio-1,2,4-triazin-5(4H)-on;
2,4-Dichlorphenoxyessigsäure;
2,4-Dichlorphenoxypropionsäure;
(2-Methyl-4-chlorphenoxy)-essigsäure;
(4-Chlor-2-methylphenoxy)-propionsäure;
Chloressigsäure-N-(methoxymethyl)-2,6-diethylanilid;
2-Ethyl-6-methyl-N-(1-methyl-2-methoxyethyl)-chloracetanilid;
2,6-Dinitro-4-trifluormethyl-N,N-dipropylanilin;
2-[4-(3,5-Dichlorpyrid-2-yl-oxy)-phenoxy]-propionsäure-(2-benzyloxyethylester), -(trimethylsilylmethylester oder -(2,2-diethoxyethylester);
N,N-Diisopropyl-S-(2,3,4-trichlorallyl)-thiolcarbamat;
N-(1-Ethylpropyl)-3,4-dimethyl-2,6-dinitroanilin;
exo-1-Methyl-4-(1-methylethyl)-2-(2-methylphenyl-methoxy)-7-oxabicyclo-(2,2,1)-heptan;
4-Ethylamino-2-(1,3-benzthiazol-2-yloxy)-acetanilid;
Methyl-5-(2,4-dichlorphenoxy)-2-nitrobenzoat;
3,5-Diiod-4-hydroxybenzonitril;
3-Isopropyl-2,1,3-benzothiadiazin-4-on-2,2-dioxid;
2-Chlor-N-{[(4-methoxy-6-methyl-1,3,5-triazin-2-yl)-amino]-carbonyl}-benzolsulfonamid;
[(4-Amino-3,5-dichlor-6-fluor-2-pyridinyl)-oxy]-essigsäure bzw. -1-methylheptylester;
3,5-Dibrom-4-hydroxy-benzonitril oder
2-[4-(2,4-Dichlorphenoxy)-phenoxy]-propionsäure-methylester sind gegebenenfalls von Vorteil. Einige Mischungen zeigen überraschenderweise auch synergistische Wirkung.

Auch eine Mischung mit anderen bekannten Wirkstoffen, wie Fungiziden, Insektiziden, Akariziden, Nematiziden, Schutzstoffen gegen Vogelfraß, Pflanzennährstoffen und Bodenstrukturverbesserungsmitteln ist möglich.

Die Wirkstoffe können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Streuen.

Die erfindungsgemäßen Wirkstoffe können sowohl vor als auch nach dem Auflaufen der Pflanzen appliziert werden.

Sie können auch vor der Saat in den Boden eingearbeitet werden.

Die angewandte Wirkstoffmenge kann in einem größeren Bereich schwanken. Sie hängt im wesentlichen von der Art des gewünschten Effektes ab. Im allgemeinen liegen die Aufwandmengen zwischen 0,01 und 10 kg Wirkstoff pro Hektar Bodenfläche, vorzugsweise zwischen 0,05 und 5 kg pro ha.

Die Herstellung und die Verwendung der erfindungsgemäßen Wirkstoffe geht aus den nachfolgenden Beispielen hervor.

Herstellungsbeispiele:

Beispiel 1

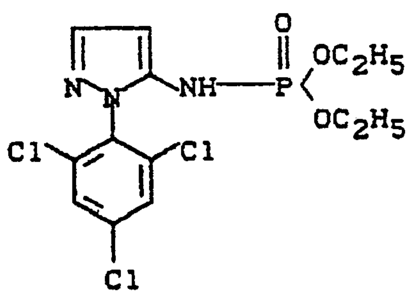

(Verfahren A)

eine Mischung aus 3 g (0,01 Mol) 5-Amino-1-(2,4,6-trichlor-phenyl)-pyrazol (vgl. DE-OS 3 402 308), 1,7 g (0,01 Mol) Phosphorsäurediethylesterchlorid und 0,05 g Diazabicyclooctan (DABCO) in 10 ml Pyridin wird 15 Stunden bei Raumtemperatur gerührt, danach mit 50 ml Wasser versetzt, filtriert, der Rückstand mehrfach mit Wasser und dann mit Petrolether gewaschen und getrocknet.

Man erhält 3,1 g (72% der Theorie) an 5-(O,O-Diethylphosphorylamino)-1-(2,4,6-trichlorphenyl)-pyrazol vom Schmelzpunkt 187°C.

Beispiel 2

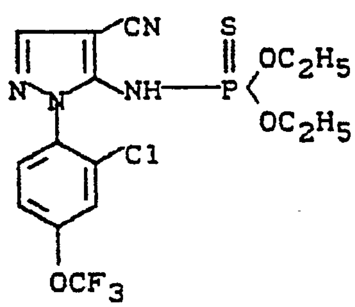

(Verfahren A)

Zu einer Suspension von 1,0 g (0,041 Mol) Natriumhydrid in 40 ml trockenem Tetrahydrofuran gibt man 6,1 g (0,02 Mol) 5-Amino-4-cyano-1-(2-chlor-4-trifluormethoxyphenyl)-pyrazol (vgl. DE-OS 3 420 985) und nach beendeter Gasentwicklung 4,5 g (0,024 Mol) O,O-Diethyl-thiophosphorylchlorid in 20 ml Tetrahydroduran. Man rührt für 15 Stunden bei Raumtemperatur, gibt abermals 1,0 g (0,041 Mol) Natriumhydrid und 6,5 g (0,02 Mol) O,O-Diethyl-thiophosphorylchlorid zu und rührt weitere 2 Stunden bei Raumtemperatur. Zur Aufarbeitung entfernt man das Lösungsmittel im Vakuum und reinigt den Rückstand chromatographisch (Kieselgel; Laufmittel: Dichlormethan-Essigester 9:1).

Man erhält 7,3 g (80% der Theorie) an 4-Cyano-5-(O,O-diethylthiophosphorylamino)-1-(2-chlor-4-trifluormethoxyphenyl)-pyrazol vom Schmelzpunkt 89°–91°C.

Beispiel 3

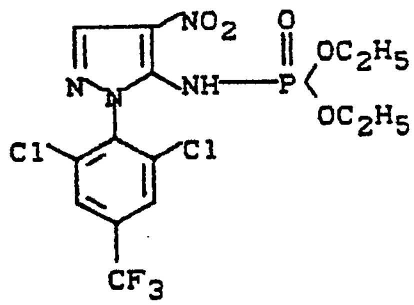

(Verfahren A)

Zu 3,4 g (0,01 Mol) 5-Amino-4-nitro-1-(2,6-dichlor-4-trifluormethyl-phenyl)-pyrazol (vgl. DE-OS 3 402 308) in 30 ml trockenem Tetrahydrofuran gibt man bei Raumtemperatur 0,5 g (0,02 Mol) Natriumhydrid (80%ig) und danach tropfenweise 1,8 g (0,01 Mol) O,O-Diethylphosphorylchlorid. Nach beendeter Zugabe rührt man weitere 30 Minuten, engt im Vakuum ein, nimmt den Rückstand in Chloroform auf, wäscht mit Wasser, trocknet über Natriumsulfat und entfernt das Lösungsmittel im Vakuum. Der Rückstand wird aus Ether/Ethanol (9:1) umkristallisiert.

Man erhält 2,8 g (59% der Theorie) an 5-(O,O-Diethylphosphorylamino)-4-nitro-1-(2,6-dichlor-4-trifluormethylphenyl)-pyrazol vom Schmelzpunkt 119°C.

Beispiel 3

Alternative Herstellung: Verfahren C

Zu 4,3 g (0,01 Mol) 5-(O,O-Diethyl-phosphoryl-amino)-1-(2,6-dichlor-4-trifluormethyl-phenyl)-pyrazol in 20 ml konzentrierter Schwefelsäure gibt man bei 0°C bis 5°C tropfenweise 0,7 ml 98-prozentige Salpetersäure und rührt nach beendeter Zugabe 1 Stunde bei Raumtemperatur. Zur Aufarbeitung gibt man den Ansatz auf 200 ml Eis, extrahiert mit 150 ml Chloroform, wäscht mehrfach mit gesättigter Natriumbicarbonatlösung, trocknet über Magnesiumsulfat und entfernt das Lösungsmittel im Vakuum.

Man erhält 2,1 g (44% der Theorie) an 5-(O,O-Diethylphosphoryl-amino)-4-nitro-1-(2,6-dichlor-4-trifluormethyl-phenyl)-pyrazol vom Schmelzpunkt 119°C.

Beispiel 4

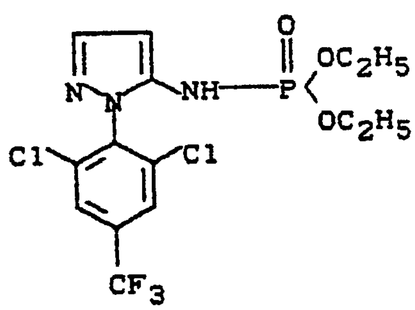

(Verfahren A)

Eine Mischung aus 3,3 g (0,01 Mol) 5-Amino-1-(2,6-Dichlor-4-trifluormethyl-phenyl)-pyrazol (vgl. DE-OS 3 402 308), 1,7 g (0,01 Mol) Phosphorsäurediethylesterchlorid und 0,05 g Diazabicyclooctan (DABCO) in 10 ml Pyridin wird 15 Stunden bei Raumtemperatur gerührt, danach mit 50 ml Wasser versetzt, filtriert, der Rückstand mehrfach mit Wasser und dann mit Petrolether gewaschen und getrocknet.

Man erhält 3,6 g (75% der Theorie) an 5-(O,O-Diethylphosphorylamino)-1-(2,6-Dichlor-4-trifluormethyl-phenyl)-pyrazol vom Schmelzpunkt 175°C.

Beispiel 5

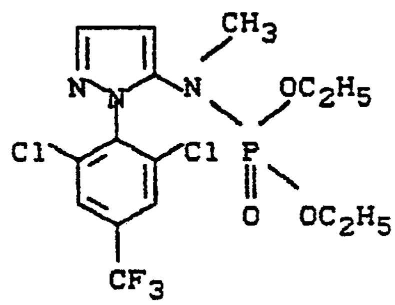

(Verfahren B)

Zu 4 g (0,0092 Mol) 5-(O,O-Diethylphosphoryl-amino)-1-(2,6-dichlor-4-trifluormethyl-phenyl)-pyrazol in 150 ml trockenem Tetrahydrofuran gibt man 3 g (0,12 Mol) 80%iges Natriumhydrid, erhitzt für 30 Minuten auf Rückflußtemperatur, setzt dann 20 ml (0,32 Mol) Methyliodid zu und erhitzt für weitere 2 Stunden auf Rückflußtemperatur. Zur Aufarbeitung filtriert man unlösliche Bestandteile ab und engt das Filtrat im Vakuum ein.

Man erhält 3,2 g (78% der Theorie) an 5-[N-Methyl-N-(O,O-diethylphosphoryl)-amino]-1-(2,6-dichlor-4-trifluormethylphenyl)-pyrazol als zähes Öl.

$^1$H-NMR ($CDCl_3$, Tetramethylsilan) $\delta = 2{,}95$ ppm.

In entsprechender Weise und gemäß den allgemeinen Angaben zur Herstellung erhält man die folgenden substituierten 5-Amino-1-aryl-pyrazole der allgemeinen Formel (I):

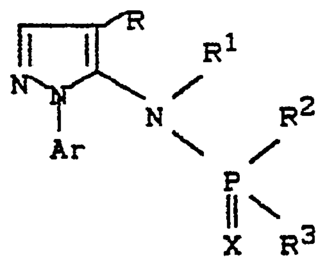

(I)

Tabelle 2

| Bsp. Nr. | R | $R^1$ | $R^2$ | $R^3$ | X | Ar | Schmelzpunkt/°C |
|---|---|---|---|---|---|---|---|
| 6 | H | H | $CH_3$ | $-OC_2H_5$ | O | 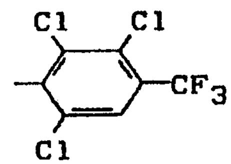 | 168 |
| 7 | H | H | $CH_3$ | 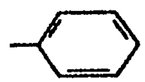 | O | 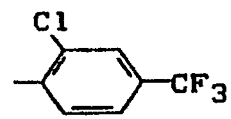 | 110 |
| 8 | H | H | $CH_3$ | 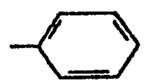 | O | 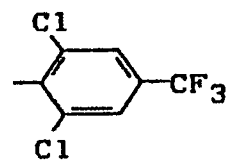 | 98 |
| 9 | H | H | $CH_3$ | $-CH_2Cl$ | O | 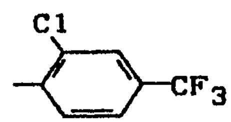 | 131 |
| 10 | H | H | $CH_3$ | $-CH_2Cl$ | O | 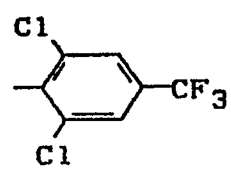 | 104 |

Tabelle 2

| Bsp. Nr. | R | $R^1$ | $R^2$ | $R^3$ | X | Ar | Schmelzpunkt/°C |
|---|---|---|---|---|---|---|---|
| 11 | H | H | $CH_3$ | $-CH_2Cl$ | O | 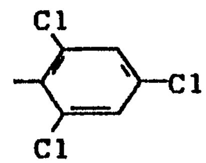 | 148 |
| 12 | H | H | $-OC_2H_5$ | $-OC_2H_5$ | O | 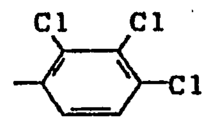 | 156 |
| 13 | H | H | $CH_3$ | 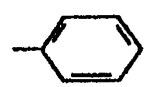 | O | 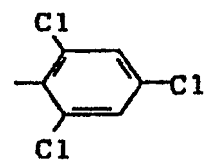 | 176 |
| 14 | H | H | $CH_3$ | $-CH_2Cl$ | O | 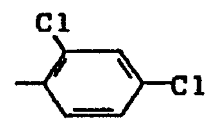 | 136-140 |
| 15 | H | H | $CH_3$ | $-CH_2Cl$ | O | 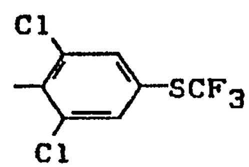 | 147-149 |

Tabelle 2

| Bsp. Nr. | R | $R^1$ | $R^2$ | $R^3$ | X | Ar | Schmelzpunkt/°C |
|---|---|---|---|---|---|---|---|
| 16 | H | H | $CH_3$ | $-CH_2Cl$ | O | 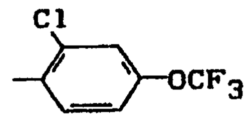 | 104-108 |
| 17 | H | H | $CH_3$ | $-C_2H_5$ | O | 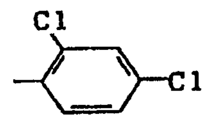 | $^1$H-NMR: 1,5*) |
| 18 | H | H | $CH_3$ | $-OC_2H_5$ | O | 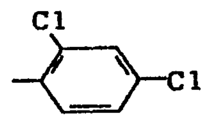 | 110-115 |
| 19 | H | H | $-OC_2H_5$ | $-OC_2H_5$ | O | 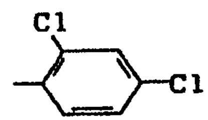 | 76-86 |
| 20 | H | H | $CH_3$ | $-OC_2H_5$ | O | 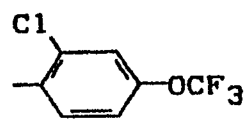 | 120-122 |

Tabelle 2

| Bsp. Nr. | R | $R^1$ | $R^2$ | $R^3$ | X | Ar | Schmelzpunkt/°C |
|---|---|---|---|---|---|---|---|
| 21 | H | H | $CH_3$ | $C_2H_5$ | O | 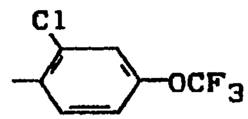 | $^1$H-NMR: 1,5*) |
| 22 | H | H | $-OC_2H_5$ | $-OC_2H_5$ | O | 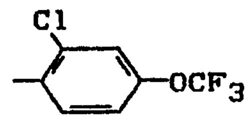 | 77 |
| 23 | H | H | $CH_3$ | $-OCH_3$ | S | 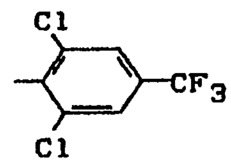 | 118 |
| 24 | $NO_2$ | H | $CH_3$ | 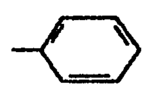 | O | 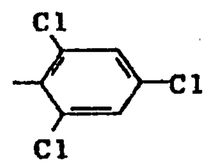 | 164 |
| 25 | $NO_2$ | H | $CH_3$ | 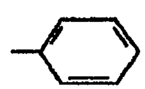 | O | 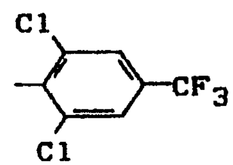 | 158 |

<u>Tabelle 2</u>

| Bsp. Nr. | R | $R^1$ | $R^2$ | $R^3$ | X | Ar | Schmelzpunkt/°C |
|---|---|---|---|---|---|---|---|
| 26 | $NO_2$ | H | $CH_3$ | 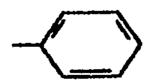 | O | 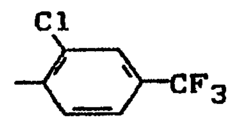 | 95 |
| 27 | $NO_2$ | H | $CH_3$ | $-OC_2H_5$ | O | 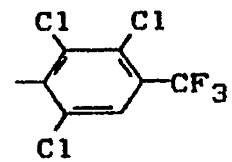 | 98 |
| 28 | $NO_2$ | H | $-OC_2H_5$ | $-OC_2H_5$ | O | 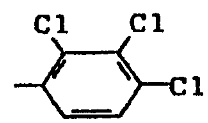 | 103 |
| 29 | $NO_2$ | H | $-OC_2H_5$ | $-OC_2H_5$ | O | 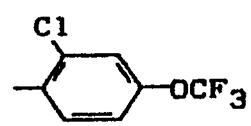 | 94-98 |
| 30 | $NO_2$ | H | $CH_3$ | $-C_2H_5$ | O | 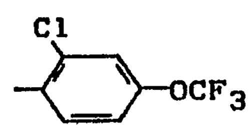 | 145-149 |

Tabelle 2

| Bsp. Nr. | R | $R^1$ | $R^2$ | $R^3$ | X | Ar | Schmelzpunkt /°C |
|---|---|---|---|---|---|---|---|
| 31 | $NO_2$ | H | $CH_3$ | $-OC_2H_5$ | O | 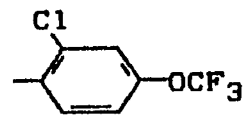 | 153 |
| 32 | $NO_2$ | H | $CH_3$ | $-OC_2H_5$ | O | 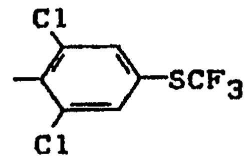 | 162-164 |
| 33 | $NO_2$ | H | $-OC_2H_5$ | $-OC_2H_5$ | O | 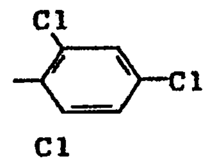 | 128-133 |
| 34 | $NO_2$ | H | $CH_3$ | $-OC_2H_5$ | O | 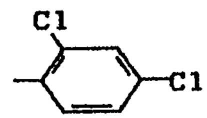 | 149-152 |
| 35 | $NO_2$ | H | $-OC_2H_5$ | $-OC_2H_5$ | O | 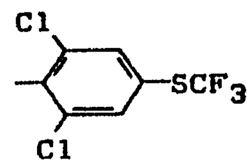 | 100-104 |

Tabelle 2

| Bsp. Nr. | R | $R^1$ | $R^2$ | $R^3$ | X | Ar | Schmelzpunkt /°C |
|---|---|---|---|---|---|---|---|
| 36 | $NO_2$ | H | $CH_3$ | $C_2H_5$ | O | 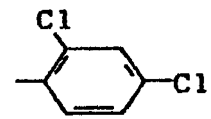 | 141-146 |
| 37 | $NO_2$ | H | $CH_3$ | $-OC_2H_5$ | O | 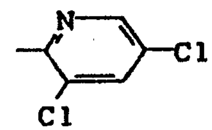 | 142-146 |
| 38 | $NO_2$ | H | $-CH_3$ | $-CH_2Cl$ | O | 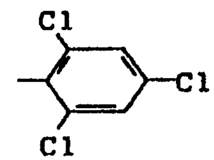 | 109 |
| 39 | $NO_2$ | H | $CH_3$ | $-CH_2Cl$ | O | 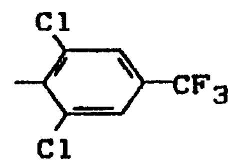 | 116 |
| 40 | $NO_2$ | H | $CH_3$ | $-CH_2Cl$ | O | 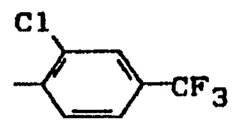 | 134 |

<u>Tabelle 2</u>

| Bsp. Nr. | R | $R^1$ | $R^2$ | $R^3$ | X | Ar | Schmelzpunkt /° C |
|---|---|---|---|---|---|---|---|
| 41 | $NO_2$ | H | $CH_3$ | $-OCH_3$ | S | 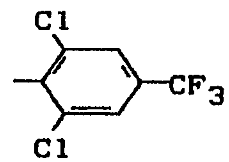 | $^1$H-NMR: 1,85*) |
| 42 | $NO_2$ | $CH_3$ | $-OC_2H_5$ | $-OC_2H_5$ | O | 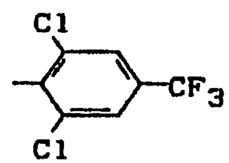 | $^1$H-NMR: 3,05*) |
| 43 | CN | H | $-OC_2H_5$ | $-OC_2H_5$ | O | 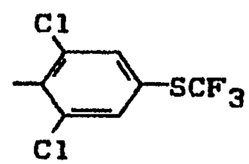 | 157-160 |
| 44 | CN | H | $-OC_2H_5$ | $-OC_2H_5$ | S | 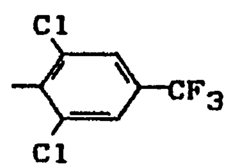 | 125-127 |
| 45 | CN | H | 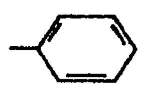 | 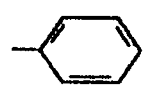 | O | 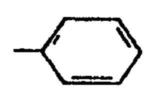 | 229-231 |

Tabelle 2

| Bsp. Nr. | R | $R^1$ | $R^2$ | $R^3$ | X | Ar | Schmelzpunkt/°C |
|---|---|---|---|---|---|---|---|
| 46 | CN | H | $-OC_2H_5$ | $-OC_2H_5$ | O | 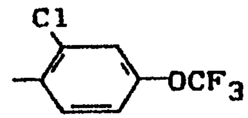 | 88-97 |
| 47 | CN | H | $-OC_2H_5$ | $-OC_2H_5$ | O | 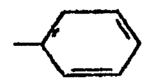 | 136-142 |
| 48 | CN | H | 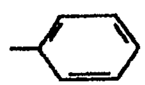 | 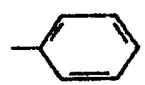 | O | 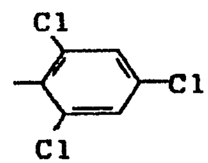 | 120 (Zers.) |
| 49 | CN | H | $-OC_2H_5$ | $-OC_2H_5$ | O | 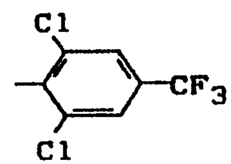 | 156 |
| 50 | CN | H | $-OC_2H_5$ | $-OC_2H_5$ | O | 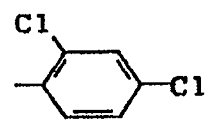 | 70 |

Tabelle 2

| Bsp. Nr. | R | $R^1$ | $R^2$ | $R^3$ | X | Ar | Schmelzpunkt/°C |
|---|---|---|---|---|---|---|---|
| 51 | H | H | $CH_3$ | $C_2H_5$ | O | 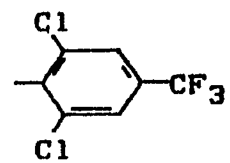 | 172 |
| 52 | $NO_2$ | H | $CH_3$ | $C_2H_5$ | O | 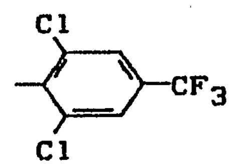 | 83 |
| 53 | H | H | $CH_3$ | $C_2H_5$ | O | 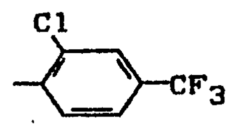 | 105 |
| 54 | H | H | $CH_3$ | $C_2H_5$ | O | 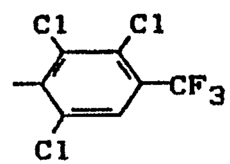 | 176 |
| 55 | H | H | $CH_3$ | $C_2H_5$ | O | 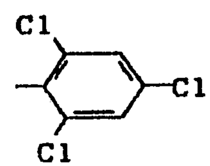 | 184 |

Tabelle 2

| Bsp. Nr. | R | $R^1$ | $R^2$ | $R^3$ | X | Ar | Schmelzpunkt/° C |
|---|---|---|---|---|---|---|---|
| 56 | $NO_2$ | H | $CH_3$ | $C_2H_5$ | O | 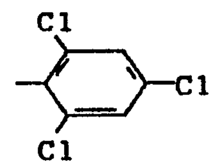 | 159 |
| 57 | H | H | $CH_3$ | $-OC_2H_5$ | O | 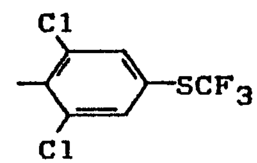 | 165 |
| 58 | H | H | $-OC_2H_5$ | $-OC_2H_5$ | O | 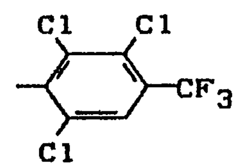 | 148 |
| 59 | H | H | $-OC_2H_5$ | $-OC_2H_5$ | O | 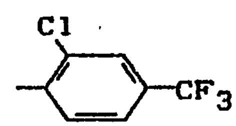 | 103 |
| 60 | H | H | $CH_3$ | $-OC_2H_5$ | O | 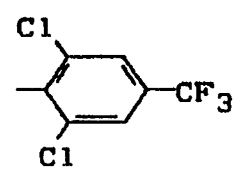 | 188 |

Tabelle 2

| Bsp. Nr. | R | $R^1$ | $R^2$ | $R^3$ | X | Ar | Schmelzpunkt/°C |
|---|---|---|---|---|---|---|---|
| 61 | H | H | $CH_3$ | $-OC_2H_5$ | O | 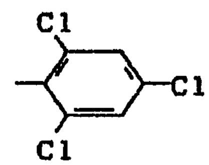 | 209 |
| 62 | H | H | $CH_3$ | $-OC_2H_5$ | O | 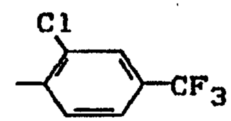 | 143 |
| 63 | H | H | $CH_3$ | $-OC_2H_5$ | O | 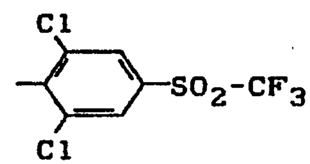 | 205 |
| 64 | H | H | $CH_3$ | $C_2H_5$ | O | 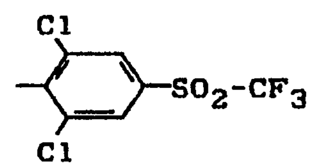 | 187 |
| 65 | H | H | $-OC_2H_5$ | $-OC_2H_5$ | O | 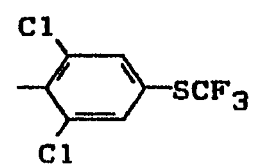 | 154-157 |

Tabelle 2

| Bsp. Nr. | R | $R^1$ | $R^2$ | $R^3$ | X | Ar | Schmelzpunkt /° C |
|---|---|---|---|---|---|---|---|
| 66 | H | H | $CH_3$ | $C_2H_5$ | O | 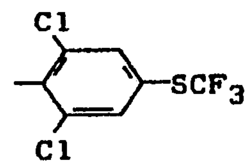 | 134 |
| 67 | H | H | $CH_3$ | $C_2H_5$ | O | 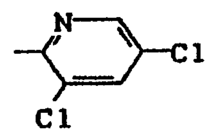 | $^1$H-NMR: 1,55*) |
| 68 | H | H | $-OC_2H_5$ | $-OC_2H_5$ | O | 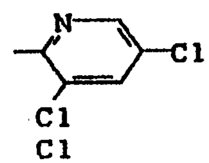 | 117 |
| 69 | $NO_2$ | H | $-OC_2H_5$ | $-OC_2H_5$ | O | 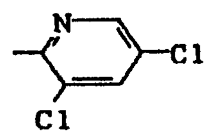 | 106 |
| 70 | $NO_2$ | H | $-OC_2H_5$ | $-OC_2H_5$ | O | 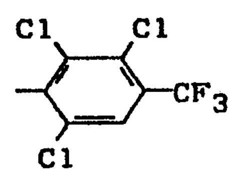 | 101 |

<u>Tabelle 2</u>

| Bsp. Nr. | R | $R^1$ | $R^2$ | $R^3$ | X | Ar | Schmelzpunkt/°C |
|---|---|---|---|---|---|---|---|
| 71 | $NO_2$ | H | $-OC_2H_5$ | $-OC_2H_5$ | O | 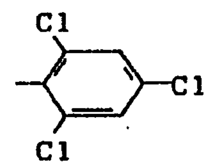 | 122 |
| 72 | $NO_2$ | H | $-OC_2H_5$ | $-OC_2H_5$ | O | 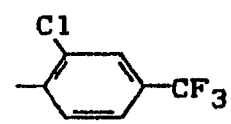 | 115 |
| 73 | $NO_2$ | H | $CH_3$ | $-OC_2H_5$ | O | 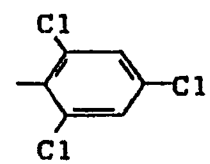 | 126 |
| 74 | $NO_2$ | H | $CH_3$ | $-OC_2H_5$ | O | 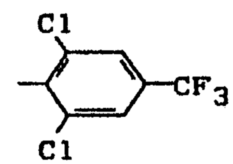 | 149 |
| 75 | $NO_2$ | H | $CH_3$ | $-OC_2H_5$ | O | 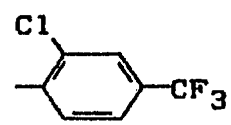 | 162 |

Tabelle 2

| Bsp. Nr. | R | $R^1$ | $R^2$ | $R^3$ | X | Ar | Schmelzpunkt /° C |
|---|---|---|---|---|---|---|---|
| 76 | $NO_2$ | H | $CH_3$ | $-OC_2H_5$ | O | 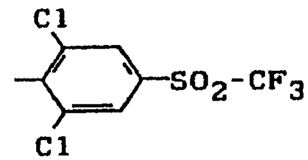 | 106 |
| 77 | $NO_2$ | H | $CH_3$ | $C_2H_5$ | O | 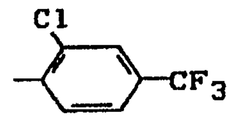 | 140 |
| 78 | $NO_2$ | H | 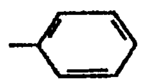 | 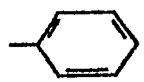 | O | 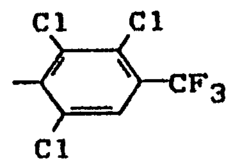 | 204 |
| 79 | $NO_2$ | H | 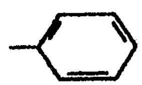 | 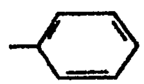 | O | 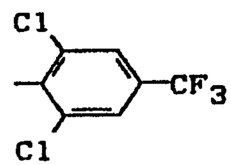 | 159 |
| 80 | H | H | $CH_3$ | $-OC_2H_5$ | O | 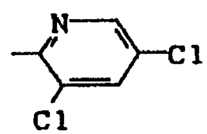 | 146-147 |

<u>Tabelle 2</u>

| Bsp. Nr. | R | $R^1$ | $R^2$ | $R^3$ | X | Ar | Schmelzpunkt/°C |
|---|---|---|---|---|---|---|---|
| 81 | CN | H | 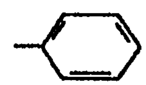 | 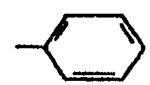 | O | 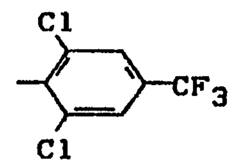 | 186-196 |
| 82 | CN | H | $-OC_2H_5$ | $-OC_2H_5$ | S | 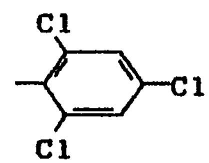 | 170-174 |
| 83 | CN | H | $-OC_2H_5$ | $-OC_2H_5$ | S | 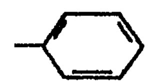 | $^1$H-NMR: 7,8*) |
| 84 | CN | H | $-OC_2H_5$ | $-OC_2H_5$ | S | 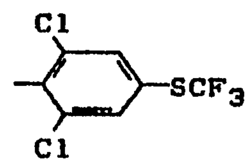 | 89-93 |
| 85 | CN | H | $-OC_2H_5$ | $-OC_2H_5$ | S | 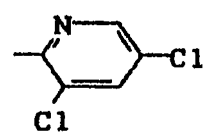 | 118 |

Tabelle 2

| Bsp. Nr. | R | $R^1$ | $R^2$ | $R^3$ | X | Ar | Schmelzpunkt/°C |
|---|---|---|---|---|---|---|---|
| 86 | CN | H | 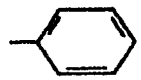 | 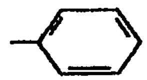 | O | 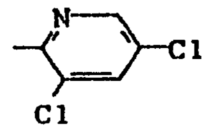 | 84 (Zers.) |
| 87 | CN | H | 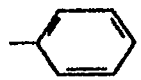 | 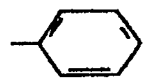 | O | 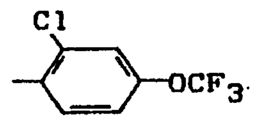 | 195-200 |
| 88 | CN | H | 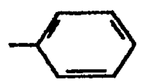 | 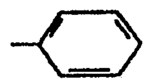 | O | 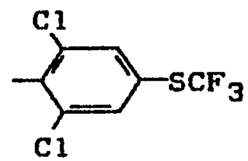 | 131 |
| 89 | H | H | $CH_3$ | $-OCH_3$ | O | 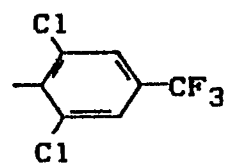 | 150-156 |
| 90 | CN | H | $CH_3$ | $-OC_2H_5$ | O | 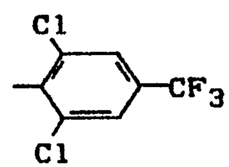 | 212-214 |

Tabelle 2

| Bsp. Nr. | R | $R^1$ | $R^2$ | $R^3$ | X | Ar | Schmelzpunkt/° C |
|---|---|---|---|---|---|---|---|
| 91 | H | H | $-OC_2H_5$ | $-OC_2H_5$ | O | 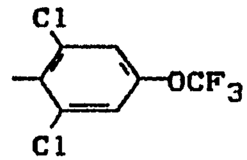 | 141 |
| 92 | H | H | 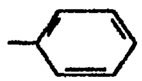 | 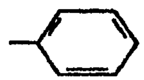 | O | 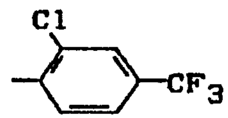 | 135 |
| 93 | $NO_2$ | H | $CH_3$ | 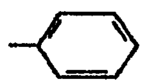 | O | 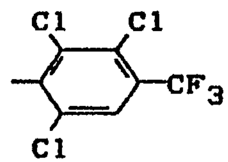 | 105 |
| 94 | $NO_2$ | H | 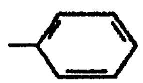 | 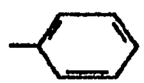 | O | 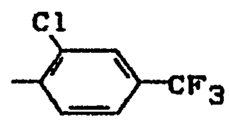 | 164 |
| 95 | H | H | $CH_3$ | $-OCH_3$ | O | 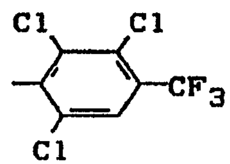 | 185-188 |

Tabelle 2

| Bsp. Nr. | R | $R^1$ | $R^2$ | $R^3$ | X | Ar | Schmelzpunkt/°C |
|---|---|---|---|---|---|---|---|
| 96 | CN | H | $CH_3$ | $-OCH_3$ | S | 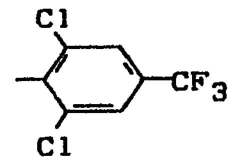 | 99-106 |
| 97 | CN | H | $CH_3$ | 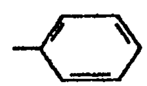 | O | 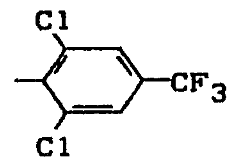 | 203 |
| 98 | CN | H | $CH_3$ | $-OC_2H_5$ | S | 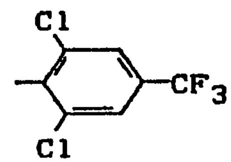 | 109-114 |
| 99 | $NO_2$ | H | $-OC_2H_5$ | $-OC_2H_5$ | S | 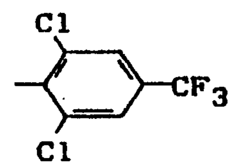 | 80-84 |
| 100 | $NO_2$ | H | $C_2H_5$ | $-OCH_3$ | S | 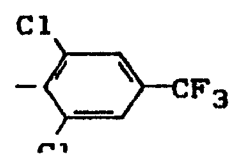 | 108-113 |

Tabelle 2

| Bsp. Nr. | R | $R^1$ | $R^2$ | $R^3$ | X | Ar | Schmelzpunkt /° C |
|---|---|---|---|---|---|---|---|
| 101 | $NO_2$ | H | $CH_3$ | $-OCH_3$ | O | 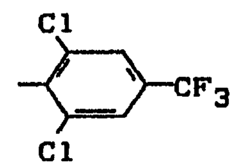 | 135 |
| 102 | CN | H | $C_2H_5$ | $-OCH_3$ | S | 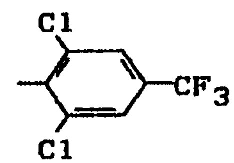 | 118-125 |
| 103 | CN | H | $C_2H_5$ | $-OCH_3$ | S | 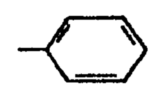 | 103-106 |
| 104 | CN | H | $CH_3$ | $-OCH_3$ | S | 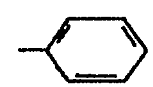 | 131 |
| 105 | H | H | $CH_3$ | $-OCH_3$ | O | 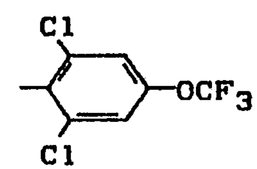 | 98 |

Tabelle 2

| Bsp. Nr. | R | $R^1$ | $R^2$ | $R^3$ | X | Ar | Schmelzpunkt/°C |
|---|---|---|---|---|---|---|---|
| 106 | H | H | 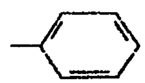 | 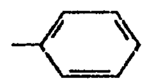 | O | 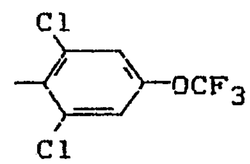 | 95 |
| 107 | H | H | 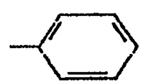 | 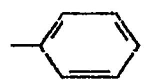 | O | 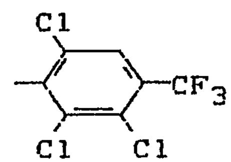 | 158 |
| 108 | H | H | 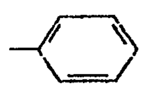 | 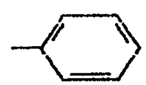 | O | 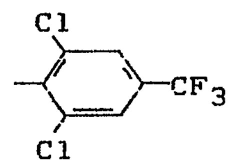 | 178 |
| 109 | H | H | $CH_3$ | 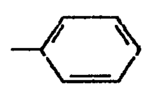 | O | 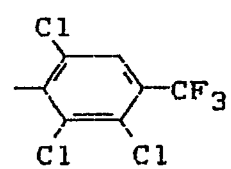 | 170 |

Tabelle 2

| Bsp. Nr. | R | $R^1$ | $R^2$ | $R^3$ | X | Ar | Schmelzpunkt/°C |
|---|---|---|---|---|---|---|---|
| 110 | $NO_2$ | H | $C_2H_5$ | -O 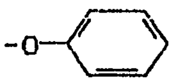 | S | 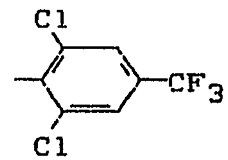 | 122 |
| 111 | $NO_2$ | H | $C_2H_5$ | -O 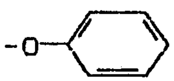 | S | 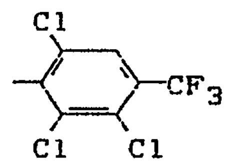 | 112 |
| 112 | $NO_2$ | H | $C_2H_5$ | $-OCH_3$ | S | 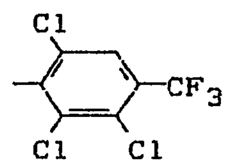 | 117 |
| 113 | $NO_2$ | H | $C_2H_5$ | $-OCH_3$ | S | 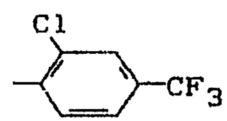 | 144 |

Tabelle 2

| Bsp. Nr. | R | $R^1$ | $R^2$ | $R^3$ | X | Ar | Schmelzpunkt/°C |
|---|---|---|---|---|---|---|---|
| 114 | $NO_2$ | H | $-OC_2H_5$ | $-OC_2H_5$ | S | 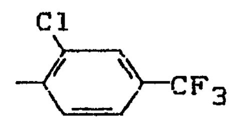 | 82 |
| 115 | $NO_2$ | H | $CH_3$ | $-OCH_3$ | S | 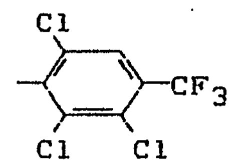 | 101 |
| 116 | H | H | $CH_3$ | $-OCH_3$ | O | 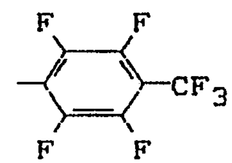 | 147 |
| 117 | H | H | $CH_3$ | 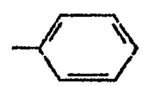 | O | 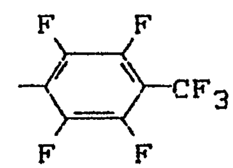 | 169 |

Tabelle 2

| Bsp. Nr. | R | $R^1$ | $R^2$ | $R^3$ | X | Ar | Schmelzpunkt/°C |
|---|---|---|---|---|---|---|---|
| 118 | H | H | $CH_3$ | $-OCH_3$ | O | 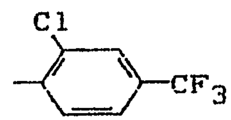 | 162 |
| 119 | $NO_2$ | H | $CH_3$ | $-OCH_3$ | O | 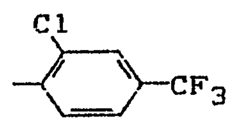 | 204 |
| 120 | $NO_2$ | H | $CH_3$ | 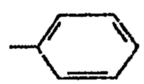 | O | 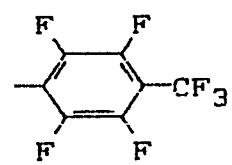 | 157 |
| 121 | $NO_2$ | H | $CH_3$ | $-OCH_3$ | O | 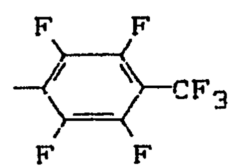 | 171 |

Tabelle 2

| Bsp. Nr. | R | $R^1$ | $R^2$ | $R^3$ | X | Ar | Schmelzpunkt/°C |
|---|---|---|---|---|---|---|---|
| 122 | $NO_2$ | H | $CH_3$ | $-OCH_3$ | S | 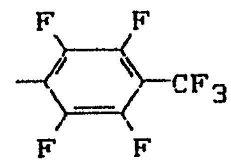 | 134 |
| 123 | $NO_2$ | H | $-OC_2H_5$ | $-OC_2H_5$ | S | 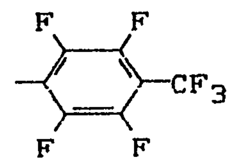 | 104 |
| 124 | $NO_2$ | H | $CH_3$ | $-OC_3H_7$-i | O | 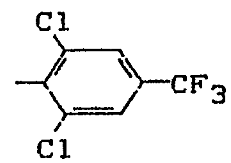 | 128 |
| 125 | CN | H | $-OC_2H_5$ | $-OC_2H_5$ | O | 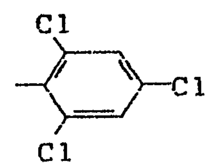 | 205 |

Tabelle 2

| Bsp. Nr. | R | $R^1$ | $R^2$ | $R^3$ | X | Ar | Schmelzpunkt/° C |
|---|---|---|---|---|---|---|---|
| 126 | CN | H | $CH_3$ | $-OCH_3$ | O | 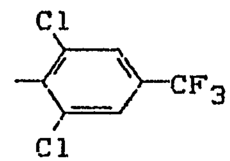 | 219-23 |
| 127 | CN | H | $C_2H_5$ | $-OCH_3$ | S | 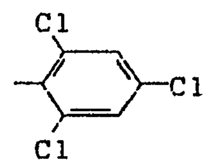 | 147-53 |
| 128 | $NO_2$ | H | $CH_3$ | $-OCH_3$ | O | 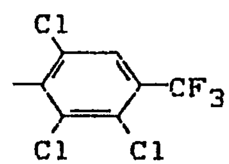 | 85 |
| 129 | CN | H | $-OC_2H_5$ | $-OC_2H_5$ | O | 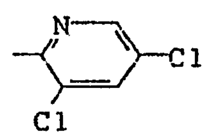 | 150-52 |

Tabelle 2

| Bsp. Nr. | R | $R^1$ | $R^2$ | $R^3$ | X | Ar | Schmelzpunkt/°C |
|---|---|---|---|---|---|---|---|
| 130 | CN | H | $CH_3$ | $-OCH_3$ | S | 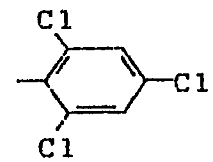 | 125-29 |
| 131 | CN | H | $CH_3$ | $-OCH_3$ | S | 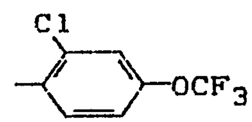 | 94-96 |
| 132 | CN | H | $CH_3$ | $-OCH_3$ | S | 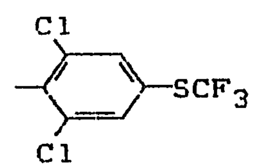 | 137-40 |
| 133 | CN | H | $CH_3$ | $-OC_2H_5$ | S | 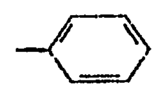 | 92-95 |

Tabelle 2

| Bsp. Nr. | R | $R^1$ | $R^2$ | $R^3$ | X | Ar | Schmelzpunkt/°C |
|---|---|---|---|---|---|---|---|
| 134 | CN | H | $C_2H_5$ | $-OCH_3$ | S | 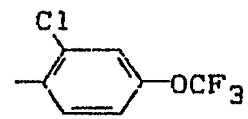 | 125-28 |
| 135 | CN | H | $CH_3$ | $-OCH_3$ | O | 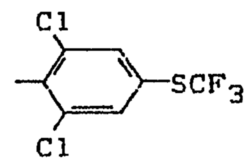 | 206-12 |
| 136 | H | H | $CH_3$ | $-OC_2H_5$ | O | 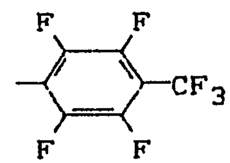 | 106-09 |
| 137 | $NO_2$ | H | $CH_3$ | $-OC_2H_5$ | O | 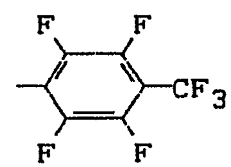 | Öl |

Tabelle 2

| Bsp. Nr. | R | $R^1$ | $R^2$ | $R^3$ | X | Ar | Schmelzpunkt/°C |
|---|---|---|---|---|---|---|---|
| 138 | $NO_2$ | H | $-OC_2H_5$ | $-OC_2H_5$ | O | 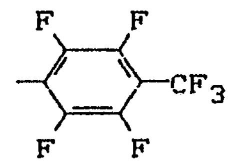 | Öl |
| 139 | CN | H | $CH_3$ | $-OCH_3$ | O | 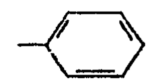 | 164-65 |
| 140 | CN | H | $CH_3$ | $-OCH_3$ | O | 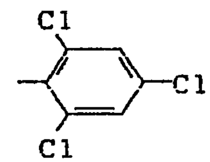 | 215-18 |
| 141 | CN | H | $C_2H_5$ | $-OCH_3$ | S | 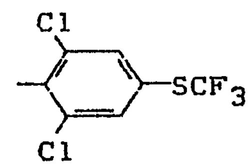 | 115-17 |

Tabelle 2

| Bsp. Nr. | R | $R^1$ | $R^2$ | $R^3$ | X | Ar | Schmelzpunkt /° C |
|---|---|---|---|---|---|---|---|
| 142 | CN | H | $CH_3$ | $-OCH_3$ | O | 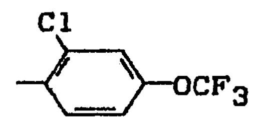 | 176-79 |
| 143 | $NO_2$ | H | $C_2H_5$ | $-OCH_3$ | S | 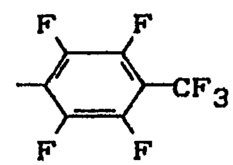 | 112-15 |
| 144 | $NO_2$ | Na | $CH_3$ | $-OCH_3$ | O | 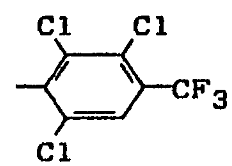 | >300 |
| 145 | $NO_2$ | Na | $CH_3$ | 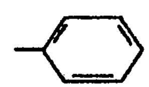 | O | 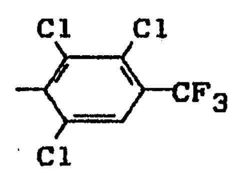 | >300 |

Tabelle 2

| Bsp. Nr. | R | $R^1$ | $R^2$ | $R^3$ | X | Ar | Schmelzpunkt/°C |
|---|---|---|---|---|---|---|---|
| 146 | $NO_2$ | Na | $CH_3$ | 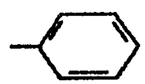 | O | 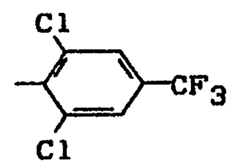 | >300 |

*) Die $^1H$-NMR-Spektren wurden in $CDCl_3$ mit Tetramethylsilan als innerem Standard aufgenommen. Angegeben ist die chemische Verschiebung als δ-Wert in ppm.

Anwendungsbeispiele

In den folgenden Anwendungsbeispielen wurde die nachstehend aufgeführte Verbindung als Vergleichssubstanz eingesetzt:

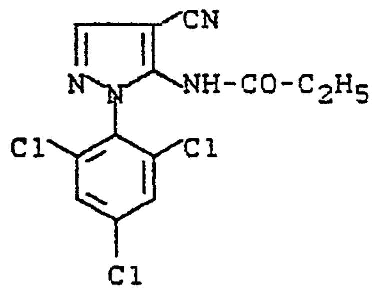

(A)

4-Cyano-5-propionamido-1-(2,4,6-trichlorphenyl)-pyrazol (bekannt aus DE-OS 3 226 513)

Beispiel A

Pre-emergence-Test

Lösungsmittel: 5 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Samen der Testpflanzen werden in normalen Boden ausgesät und nach 24 Stunden mit der Wirkstoffzubereitung begossen. Dabei hält man die Wassermenge pro Flächeneinheit zweckmäßigerweise konstant. Die Wirkstoffkonzentration in der Zubereitung spielt keine Rolle, entscheidend ist nur die Aufwandmenge des Wirkstoffs pro Flächeneinheit. Nach drei Wochen wird der Schädigungsgrad der Pflanzen bonitiert in % Schädigung im Vergleich zur Entwicklung der unbehandelten Kontrolle.

Eine deutliche Überlegenheit in der Wirksamkeit ebenso wie in der Nutzpflanzenselektivität gegenüber der Vergleichssubstanz A zeigen in diesem Test z.B. die Verbindungen gemäß der Herstellungsbeispiele: 74 und 76.

Beispiel B

Post-emergence-Test

Lösungsmittel: 5 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Mit der Wirkstoffzubereitung spritzt man Testpflanzen, welche eine Höhe von 5–15 cm haben so, daß die jeweils gewünschten Wirkstoffmengen pro Flächeneinheit ausgebracht werden. Die Konzentration der Spritzbrühe wird so gewählt, daß in 2000 l Wasser/ha die jeweils gewünschten Wirkstoffmengen ausgebracht werden. Nach drei Wochen wird der Schädigungsgrad der Pflanzen bonitiert in % Schädigung im Vergleich zur Entwicklung der unbehandelten Kontrolle.

Eine deutliche Überlegenheit in der Wirksamkeit sowie in der Nutzpflanzenselektivität gegenüber der Vergleichssubstanz A zeigen in diesem Test z.B. die Verbindungen gemäß der Herstellungsbeispiele: 3, 74 und 76.

## Patentansprüche

1. Substituierte 5-Amino-1-aryl-pyrazole der Formel (I),

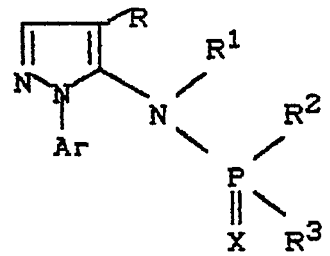

(I)

in welcher
R für Wasserstoff, Cyano, Nitro oder für geradkettiges oder verzweigtes Alkoxycarbonyl mit 1 bis 4 Kohlenstoffatomen steht,
$R^1$ für Wasserstoff oder für geradkettiges oder verzweigtes Alkyl mit 1 bis 6 Kohlenstoffatomen steht,
$R^2$ und $R^3$ unabhängig voneinander für jeweils geradkettiges oder verzweigtes Alkyl, Alkenyl oder Alkinyl mit jeweils bis zu 8 Kohlenstoffatomen, für geradkettiges oder verzweigtes Halogenalkyl mit 1 bis 6 Kohlenstoffatomen und 1 bis 13 gleichen oder verschiedenen Halogenatomen, für geradkettiges oder verzweigtes Alkoxyalkyl mit jeweils 1 bis 4 Kohlenstoffatomen in den einzelnen Alkylteilen, für geradkettiges oder verzweigtes Alkoxy mit 1 bis 6 Kohlenstoffatomen, für Cycloalkyl oder Cycloalkyloxy mit jeweils 3 bis 7 Kohlenstoffatomen oder für jeweils gegebenenfalls im Arylteil einfach oder mehrfach, gleich oder verschieden substituiertes Aryl, Aryloxy, Aralkyl oder Aralkyloxy mit jeweils 6 bis 10 Kohlenstoffatomen in den einzelnen Arylteilen und gegebenenfalls ein bis drei Kohlenstoffatomen in den geradkettigen oder verzweigten Alkylteilen stehen, wobei als Arylsubstituenten jeweils in Frage kommen: Halogen, Cyano, Nitro sowie jeweils geradkettiges oder verzweigtes Alkyl, Alkoxy, Alkylthio oder Halogenalkyl mit jeweils 1 bis 4 Kohlenstoffatomen und im Fall des Halogenalkyl mit 1 bis 9 gleichen oder verschiedenen Halogenatomen,
X für Sauerstoff oder Schwefel steht und
Ar für jeweils gegebenenfalls einfach oder mehrfach, gleich oder verschieden substituiertes Phenyl, 2-Pyridyl, 3-Pyridyl oder 4-Pyridyl steht, wobei als Substituenten jeweils in Frage kommen: Cyano, Nitro, Halogen, jeweils geradkettiges oder verzweigtes Alkyl, Alkoxy oder Alkoxycarbonyl mit jeweils 1 bis 4 Kohlenstoffatomen im Alkylteil, jeweils geradkettiges oder verzweigtes Halogenalkyl oder Halogenalkoxy mit jeweils 1 bis 4 Kohlenstoffatomen und 1 bis 9 gleichen oder verschiedenen Halogenatomen oder der Rest $-S(O)_n-R^4$, wobei
$R^4$ für Amino, für jeweils geradkettiges oder verzweigtes Alkyl, Alkylamino, Dialkylamino oder Halogenalkyl mit jeweils 1 bis 4 Kohlenstoffatomen in den einzelnen Alkylteilen und im Fall des Halogenalkyl mit 1 bis 9 gleichen oder verschiedenen Halogenatomen steht und
n für eine Zahl 0, 1 oder 2 steht,
sowie deren Alkalimetallsalze.

2. Substituierte 5-Amino-1-aryl-pyrazole der Formel (I) gemäss Anspruch 1, in welcher
R für Wasserstoff, Cyano, Nitro, Methoxycarbonyl oder Ethoxycarbonyl steht,
$R^1$ für Wasserstoff, Methyl, Ethyl, n- oder i-Propyl, sowie n-, i- oder s-Butyl steht,
$R^2$ und $R^3$ unabhängig voneinander jeweils für Methyl, Ethyl, n- oder i-Propyl, n-, i-, s- oder t-Butyl, Allyl, Propargyl, Chlormethyl, Dichlormethyl, Trichlormethyl, Fluormethyl, Dichlorfluormethyl, Trifluormethyl, Dichlorfluromethyl, Difluorchloremethyl, Chlorethyl, Trichlorethyl, Pentachlorethyl, Trifluorethyl, Pentafluorethyl, Bromethyl, Methoxymethyl, Methoxyethyl, Ethoxymethyl, Ethoxyethyl, n-Propoxymethyl, i-Propoxymethyl, n-Propoxyethyl, i-Propoxyethyl, Methoxy, Ethoxy, n- oder i-Propoxy, n-, i-, s- oder t-Butoxy, Cyclopropyl, Cyclopentyl, Cyclohexyl, Cyclohexyloxy oder für jeweils gegebenenfalls ein- bis fünffach gleich oder verschieden substituiertes Benzyl, Benzyloxy, Phenyl oder Phenoxy stehen, wobei als Arylsubstituenten jeweils in Frage kommen: Fluor, Chlor, Brom, Cyano, Nitro, Methyl, Ethyl, Methoxy, Methylthio oder Trifluormethyl,
X für Sauerstoff oder Schwefel steht und
Ar für gegebenenfalls ein- bis fünffach, gleich oder verschieden substituiertes Phenyl oder für gegebenenfalls ein- bis vierfach, gleich oder verschieden substituiertes 2-Pyridyl steht, wobei als Substituenten jeweils in Frage kommen: Cyano, Nitro, Fluor, Chlor, Brom, Iod, Methyl, Ethyl, n- und i-Propyl, n-, i-, s- und t-Butyl, Methoxy, Ethoxy, Methoxycarbonyl, Ethoxycarbonyl, Trifluormethyl, Trichlormethyl, Ethoxycarbonyl, Trifluormethyl, Trichlormethyl, Dichlorfluormethyl, Difluorchlormethyl, Chlormethyl, Dichlormethyl, Difluormethyl, Pentafluorethyl, Tetrafluorethyl, Trifluorchlorethyl, Trifluorethyl, Difluordichlorethyl, Trifluordichlorethyl, Pentachlorethyl, Trifluormethoxy, Trichlormethoxy, Dichlorfluormethoxy, Difluorchlormethoxy, Chlormethoxy, Dichlormethoxy, Difluormethoxy, Pentafluorethoxy, Tetrafluorethoxy, Trifluorchlorethoxy, Trifluorethoxy, Difluordichlorethoxy, Trifluordichlorethoxy, Pentachlorethoxy oder der Rest $-S(O)_n-R^4$, wobei

$R^4$ für Amino, Methylamino, Ethylamino, Dimethylamino, Diethylamino, Fluordichlormethyl, Difluormethyl, Tetrafluorethyl, Trichlorethyl, Trifluormethyl, Methyl oder Ethyl steht und
n für eine Zahl 0, 1 oder 2 steht.

3. Verfahren zur Herstellung von substituierten 5-Amino-1-aryl-pyrazolen der Formel (I)

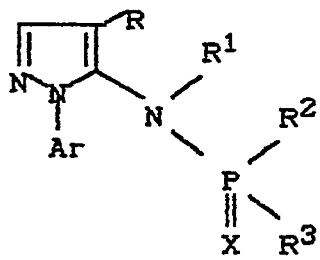

(I)

in welcher
R für Wasserstoff, Cyano, Nitro oder für geradkettiges oder verzweigtes Alkoxycarbonyl mit 1 bis 4 Kohlenstoffatomen steht,
$R^1$ für Wasserstoff oder für geradkettiges oder verzweigtes Alkyl mit 1 bis 6 Kohlenstoffatomen steht,
$R^2$ und $R^3$ unabhängig voneinander für jeweils geradkettiges oder verzweigtes Alkyl, Alkenyl oder Alkinyl mit jeweils bis zu 8 Kohlenstoffatomen, für geradkettiges oder verzweigtes Halogenalkyl mit 1 bis 6 Kohlenstoffatomen und 1 bis 13 gleichen oder verschiedenen Halogenatomen, für geradkettiges oder verzweigtes Alkoxyalkyl mit jeweils 1 bis 4 Kohlenstoffatomen in den einzelnen Alkylteilen, für geradkettiges oder verzweigtes Alkoxy mit 1 bis 6 Kohlenstoffatomen, für Cycloalkyl oder Cycloalkyloxy mit jeweils 3 bis 7 Kohlenstoffatomen oder für jeweils gegebenenfalls im Arylteil einfach oder mehrfach, gleich oder verschieden substituiertes Aryl, Aryloxy, Aralkyl oder Aralkyloxy mit jeweils 6 bis 10 Kohlenstoffatomen in den einzelnen Arylteilen und gegebenenfalls ein bis drei Kohlenstoffatomen in den geradkettigen oder verzweigten Alkylteilen stehen, wobei als Arylsubstituenten jeweils in Frage kommen: Halogen, Cyano, Nitro sowie jeweils geradkettiges oder verzweigtes Alkyl, Alkoxy, Alkylthio oder Halogenalkyl mit jeweils 1 bis 4 Kohlenstoffatomen und im Fall des Halogenalkyl mit 1 bis 9 gleichen oder verschiedenen Halogenatomen,
X für Sauerstoff oder Schwefel steht und
Ar für jeweils gegebenenfalls einfach oder mehrfach, gleich oder verschieden substituiertes Phenyl, 2-Pyridyl, 3-Pyridyl oder 4-Pyridyl steht, wobei als Substituenten jeweils in Frage kommen: Cyano, Nitro, Halogen, jeweils geradkettiges oder verzweigtes Alkyl, Alkoxy oder Alkoxycarbonyl mit jeweils 1 bis 4 Kohlenstoffatomen im Alkylteil, jeweils geradkettiges oder verzweigtes Halogenalkyl oder Halogenalkoxy mit jeweils 1 bis 4 Kohlenstoffatomen und 1 bis 9 gleichen oder verschiedenen Halogenatomen oder der Rest $-S(O)_n-R^4$, wobei
$R^4$ für Amino, für jeweils geradkettiges oder verzweigtes Alkyl, Alkylamino, Dialkylamino oder Halogenalkyl mit jeweils 1 bis 4 Kohlenstoffatomen in den einzelnen Alkylteilen und im Fall des Halogenalkyl mit 1 bis 9 gleichen oder verschiedenen Halogenatomen steht und
n für eine Zahl 0, 1 oder 2 steht, dadurch gekennzeichnet, dass man
(A) 5-Amino-1-aryl-pyrazole der Formel (II),

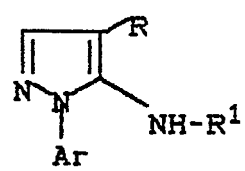

(II)

in welcher
R, $R^1$ und Ar die oben angegebene Bedeutung haben, mit Phosphorhalogenid-Verbindungen der Formel (III),

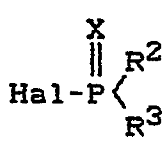

(III)

in welcher
$R^2$, $R^3$ und X die oben angegebene Bedeutung haben und
Hal für Halogen steht, gegebenenfalls in Gegenwart eines Verdünnungsmittels und gegebenenfalls in Gegenwart eines Säurebindemittels umsetzt; oder daß man

(B) substituierte 5-Amino-1-aryl-pyrazole der Formel (Ia);

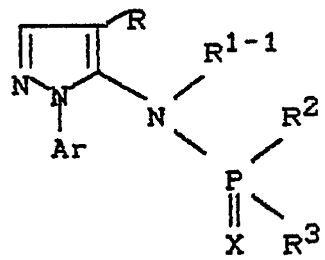

(Ia)

in welcher
R, $R^2$, $R^3$, X und Ar die oben angegebene Bedeutung haben und
$R^{1-1}$ für geradkettiges oder verzweigtes Alkyl mit 1 bis 6 Kohlenstoffatomen steht, erhält, wenn man die nach Verfahren (A) erhältlichen substituierten 5-Amino-1-aryl-pyrazole der Formel (Ib),

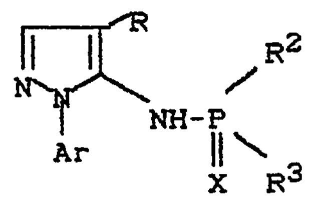

(Ib)

in welcher
R, $R^2$, $R^3$, X und Ar die oben angegebene Bedeutung haben, mit Alkylierungsmitteln der Formel (IV),

$R^{1-1}$–A (IV)

in welcher
$R^{1-1}$ für geradkettiges oder verzweigtes Alkyl mit 1 bis 6 Kohlenstoffatomen steht und
A für Halogen oder für jeweils gegebenenfalls substituiertes Alkylsulfonyloxy, Alkoxysulfonyloxy oder Arylsulfonyloxy steht, gegebenenfalls in Gegenwart eines Verdünnungsmittels, gegegebenenfalls in Gegenwart eines Säurebindemittels und gegebenenfalls in Gegenwart eines Katalysators umsetzt; oder daß man
(C) 4-Nitro-1-aryl-pyrazole der Formel (Ic)

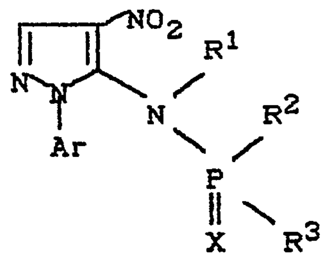

(Ic)

in welcher
$R^1$, $R^2$, $R^3$, Ar und X die oben angegebene Bedeutung haben, erhält, wenn man die nach Verfahren (A) oder (B) erhältlichen in 4-Stellung unsubstituierten 1-Aryl-pyrazole der Formel (Id),

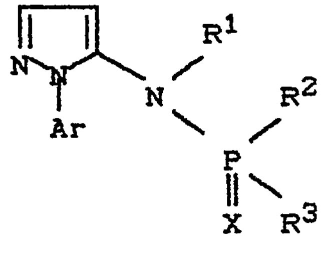

(Id)

in welcher
$R^1$, $R^2$, $R^3$, X und Ar die oben angegebene Bedeutung haben, mit Salpetersäure gegebenenfalls in Gegenwart eines Verdünnungsmittels und gegebenenfalls in Gegenwart eines Katalysators umsetzt, oder daß man die Alkalimetallsalze erhält, wenn man 5-Amino-1-aryl-pyrazole der Formel (I), in denen $R^1$ für Wasserstoff steht, mit einem anorganischen Alkalimetallsalz umsetzt.

4. Herbizide Mittel, gekennzeichnet durch einen Gehalt an mindestens einem substituierten 5-Amino-1-aryl-pyrazol der Formel (I) gemäß den Ansprüchen 1 bis 3.

5. Verfahren zur Bekämpfung von Unkräutern, dadurch gekennzeichnet, daß man substituierte 5-Amino-1-aryl-pyrazole der Formel (I) gemäß den Ansprüchen 1 bis 3 auf Unkräuter und/oder ihren Lebensraum einwirken läßt.

6. Verwendung von substituierten 5-Amino-1-aryl-pyrazolen der Formel (I) gemäß den Ansprüchen 1 bis 3 zur Bekämpfung von Unkräutern.

7. Verfahren zur Herstellung von herbiziden Mitteln, dadurch gekennzeichnet, daß man substituierte 5-Amino-1-aryl-pyrazole der Formel (I) gemäß den Ansprüchen 1 bis 3 mit Streckmitteln und/oder oberflächenaktiven Substanzen vermischt.

8. Die Verbindung der Formel

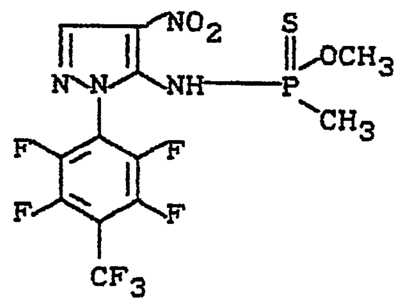

## Claims

1. Substituted 5-amino-1-aryl-pyrazoles of the formula (I)

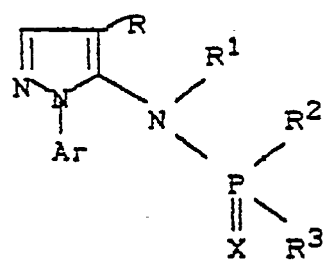

(I)

in which

R represents hydrogen, cyano or nitro, or represents straight-chain or branched alkoxycarbonyl with 1 to 4 carbon atoms,

$R^1$ represents hydrogen, or represents straightchain or branched alkyl with 1 to 6 carbon atoms, $R^2$ and $R^3$ independently of one another represent in each case straight-chain or branched alkyl, alkenyl or alkinyl with in each case up to 8 carbon atoms, or represent straight-chain or branched halogenoalkyl with 1 to 6 carbon atoms and 1 to 13 identical or different halogen atoms, or represent straight-chain or branched alkoxyalkyl with in each case 1 to 4 carbon atoms in the individual alkyl parts, or represent straightchain or branched alkoxy with 1 to 6 carbon atoms, or represent cycloalkyl or cycloalkyloxy with in each case 3 to 7 carbon atoms, or repesent aryl, aryloxy, aralkyl or aralkyloxy with in each case 6 to 10 carbon atoms in the individual aryl parts and, where appropriate, one to three carbon atoms in the straight-chain or branched alkyl parts, in each case optionally monosubstituted or polysubstituted in the aryl part by identical or different substituents, possible substituents on the aryl in each case being: halogen, cyano, nitro and in each case straight-chain or branched alkyl, alkoxy, alkylthio or halogenoalkyl with in each case 1 to 4 carbon atoms and, in the case of the halogenoalkyl, with 1 to 9 identical or different halogen atoms,

X repesents oxygen or sulphur and

Ar represents phenyl, 2-pyridyl, 3-pyridyl or 4-pyridyl, in each case optionally monosubstituted or polysubstituted by identical or different substituents, possible substituents in each case being: cyano, nitro, halogen, in each case straight-chain or branched alkyl, alkoxy and alkoxycarbonyl with in each case 1 to 4 carbon atoms in the alkyl part, in each case straight-chain or branched halogenoalkyl and halogenoalkoxy with in each case 1 to 4 carbon atoms and 1 to 9 identical or different halogen atoms or the

radical $-S(O)n-R^4$, wherein
$R^4$ represents amino, or represents in each case straight-chain or branched alkyl, alkylamino, dialkylamino or halogenoalkyl with in each case 1 to 4 carbon atoms in the individual alkyl parts and, in the case of the halogenoalkyl, with 1 to 9 identical or different halogen atoms, and n represents the number 0, 1 or 2 and their alkali metal salts.

2. Substituted 5-amino-1-aryl-pyrazoles of the formula (I) according to Claim 1, in which
R represents hydrogen, cyano, nitro, methoxycarbonyl or ethoxycarbonyl,
$R^1$ represents hydrogen, methyl, ethyl, n- or i-propyl, or n-, i- or s-butyl,
$R^2$ and $R^3$ independently of one another each represent methyl, ethyl, n- or i-propyl, n-, i-, s- or t-butyl, allyl, propargyl, chloromethyl, dichloromethyl, trichloromethyl, fluoromethyl, dichlorofluoromethyl, trifluoromethyl, dichlorofluoromethyl, difluorochloromethyl, chloroethyl, trichloroethyl, pentachloroethyl, trifluoroethyl, pentafluoroethyl, bromoethyl, methoxymethyl, methoxyethyl, ethoxymethyl, ethoxyethyl, n-propoxymethyl, i-propoxymethyl, n-propoxyethyl, i-propoxyethyl, methoxy, ethoxy, n- or i-propoxy, n-, i-, s- or t-butoxy, cyclopropyl, cyclopentyl, cyclohexyl or cyclohexyloxy, or represent benzyl, benzyloxy, phenyl or phenoxy, in each case optionally mono-, di-, tri-, tetra- or pentasubstituted by identical or different substituents, possible substituents on the aryl in each case being: fluorine, chlorine, bromine, cyano, nitro, methyl, ethyl, methoxy, methylthio or trifluoromethyl, X represents oxygen or sulphur and Ar represents phenyl which is is optionally mono-, di-, tri-, tetra- or pentasubstituted by identical or different substituents, or represents 2-pyridyl which is optionally mono-, di-, tri- or tetrasubstituted by identical or different substituents, possible substituents in each case being: cyano, nitro, fluorine, chlorine, bromine, iodine, methyl, ethyl, n- and i-propyl, n-, i-, s- and t-buthyl, methoxy, ethoxy, methoxycarbonyl, ethoxycarbonyl, trifluoromethyl, trichloromethyl, dichlorofluoromethyl, difluorochloromethyl, chloromethyl, dichloromethyl, difluoromethyl, pentafluoroethyl, tetrafluoroethyl, trifluorochloroethyl, trifluoroethyl, difluorodichloroethyl, trifluoromethoxy, trichloromethoxy, dichlorofluoromethoxy, difluorochloromethoxy, chloromethoxy, dichloromethoxy, difluoromethoxy, pentafluoroethoxy, tetrafluoroethoxy, trifluorochloroethoxy, trifluoroethoxy, difluorodichloroethoxy, trifluorodichloroethoxy, pentachloroethoxy or the radical $-S(O)_n-R^4$, wherein
$R^4$ represents amino, methylamino, ethylamino, dimethylamino, diethylamino, fluorodichloromethyl, difluoromethyl, tetrafluoroethyl, trichloroethyl, trifluoromethyl, methyl or ethyl and
n represents the number 0, 1 or 2.

3. Process for the preparation of substituted 5-amino-1-aryl-pyrazoles of the formula (I)

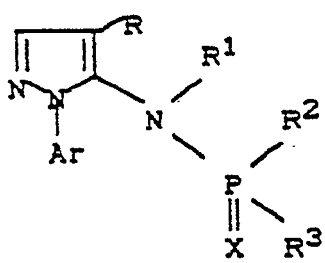

(I)

in which
R represents hydrogen, cyano or nitro, or represents straight-chain or branched alkoxycarbonyl with 1 to 4 carbon atoms,
$R^1$ represents hydrogen, or represents straight-chain or branched alkyl with 1 to 6 carbon atoms, $R^2$ and $R^3$ independently of one another represent in each case straight-chain or branched alkyl, alkenyl or alkinyl with in each case up to 8 carbon atoms, or represent straight-chain or branched halogenoalkyl with 1 to 6 carbon atoms and 1 to 13 identical or different halogen atoms, or represent straight-chain or branched alkoxyalkyl with in each case 1 to 4 carbon atoms in the individual alkyl parts, or represent straight-chain or branched alkoxy with 1 to 6 carbon atoms, or represent cycloalkyl or cycloalkyloxy with in each case 3 to 7 carbon atoms, or represent aryl, aryloxy, aralkyl or aralkyloxy with in each case 6 to 10 carbon atoms in the individual aryl parts and, where appropriate, one to three carbon atoms in the straight-chain or branched alkyl parts, in each case optionally monosubstituted or polysubstituted in the aryl part by identical or different substituents, possible substituents on the aryl in each case being: halogen, cyano, nitro and in each case straight-chain or branched alkyl, alkoxy, alkylthio or halogenoalkyl with in each case 1 to 4 carbon atoms and, in the case of the hologenoalkyl, with 1 to 9 identical or different halogen atoms,
X represents oxygen or sulphur and
Ar represents phenyl, 2-pyridyl, 3-pyridyl or 4-pyridyl, in each case optionally monosubstituted or polysubstituted by identical or different substituents, possible substituents in each case being: cyano, nitro, halogen, in each case straight-chain or branched alkyl, alkoxy or alkoxycarbonyl with in each case 1 to 4 carbon atoms in the alkyl part, in each case straight-chain or branched halogenoalkyl and halogenoalkoxy with in each case 1 to 4 carbon atoms and 1 to 9 identical or different halogen atoms or the radi-

cal $-S(O)_n-R^4$, wherein
$R^4$ represents amino, or represents in each case straight-chain or branched alkyl, alkylamino, dialkylamino or halogenoalkyl with in each case 1 to 4 carbon atoms in the individual alkyl parts and, in the case of the halogenoalkyl, with 1 to 9 identical or different halogen atoms, and n represents the number 0, 1 or 2 and characterized in that
(a) 5-amino-1-aryl-pyrazoles of the formula (II)

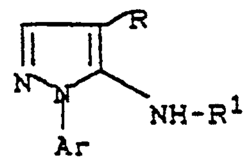

(II)

in which
R, $R^1$ and Ar have the abovementioned meaning, are reacted with phosphorus halide compounds of the formula (III)

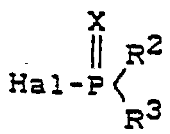

(III)

in which
$R^2$, $R^3$ and X have the abovementioned meaning and Hal represents halogen, if appropriate in the presence of a diluent and if appropriate in the presence of an acid-binding agent; or in that
(B) substituted 5-amino-1-aryl-pyrazoles of the formula (Ia);

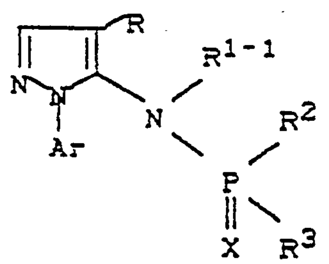

(Ia)

in which
R, $R^2$, $R^3$, X and Ar have the abovementioned meaning and
$R^{1-1}$ represents straight-chain or branched alkyl with 1 to 6 carbon atoms, are obtained by a process in which the substituted 5-amino-1-aryl-pyrazoles obtainable by process (A), of the formula (Ib)

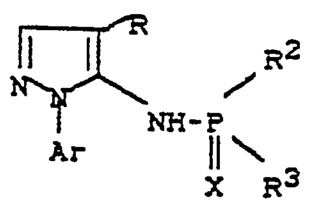

(Ib)

in which
R, $R^2$, $R^3$, X and Ar have the abovementioned meaning, are reacted with alkylating agents of the formula (IV)

$R^{1-1}-A$ (IV)

in which
$R^{1-1}$ represents straight-chain or branched alkyl with 1 to 6 carbon atoms and
A represents halogen or represents in each case optionally substituted alkylsulphonyloxy, alkoxysulphonyloxy or arylsulphonyloxy if appropriate in the presence of a diluent, if appropriate in the presence of an acidbinding agent and if appropriate in the presence of a catalyst; or in that
(C) 4-nitro-1-aryl-pyrazoles of the formula (Ic)

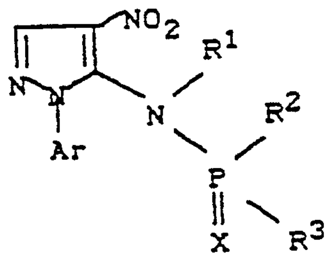

(Ic)

in which
$R^1$, $R^2$, $R^3$, Ar and X have the abovementioned meaning, are obtained by a process in which the 1-aryl-pyrazoles unsubstituted in the 4-position obtainable by process (A) or (B), of the formula (Id)

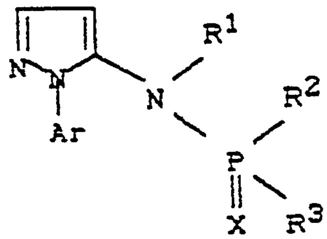

(Id)

in which
$R^1$, $R^2$, $R^3$, X and Ar have the abovementioned meaning, are reacted with nitric acid, if appropriate in the presence of a diluent and if appropriate in the presence of a catalyst, or in that the alkali metal salts are obtained when 5-amino-1-aryl-pyrazoles of the formula (I), in which $R^1$ stands for hydrogen, are reacted with an inorganic alkali metal salt.

4. Herbicidal agents, characterized in that they contain at least one substituted 5-amino-1-aryl-pyrazole of the formula (I) according to Claims 1 to 3.

5. Method of combating weeds, characterized in that substituted 5-amino-1-aryl-pyrazoles of the formula (I) according to Claims 1 to 3 are allowed to act on weeds and/or their environment.

6. Use of substituted 5-amino-1-aryl-pyrazoles of the formula (I) according to Claims 1 to 3 for combating weeds.

7. Process for the preparation of herbicidal agents, characterized in that substituted 5-amino-1-aryl-pyrazoles of the formula (I) according to Claims 1 to 3 are mixed with extenders and/or surface-active substances.

8. The compound of the formula

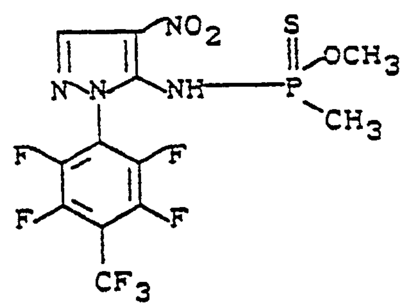

## Revendications

1. 5-amino-1-aryl-pyrazoles substitués de formule (I),

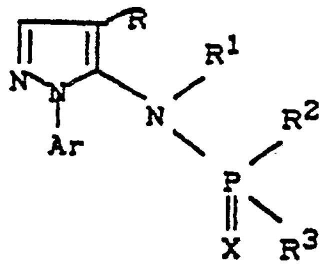

(I)

dans laquelle

R représente l'hydrogène, un groupe cyano, nitro ou alcoxycarbonyle à chaîne droite ou ramifiée en $C_1$–$C_4$,

$R^1$ représente l'hydrogène ou un groupe alkyle à chaîne droite ou ramifiée en $C_1$–$C_6$,

$R^2$ et $R^3$ représentent chacun, indépendamment l'un de l'autre, un groupe alkyle, alcényle ou alcynyle, chacun à chaîne droite ou ramifiée et contenant jusqu'à 8 atomes de carbone, un groupe halogénoalkyle à chaîne droite ou ramifiée contenant 1 à 6 atomes de carbone et 1 à 13 atomes d'halogènes identiques ou différents, un groupe alcoxyalkyle à chaîne droite ou ramifiée contenant 1 à 4 atomes de carbone dans chacune des parties alkyles, un groupe alcoxy à chaîne droite ou ramifiée en $C_1$–$C_6$, un groupe cycloalkyle ou cycloalkyloxy contenant chacun 3 à 7 atomes de carbone, ou un groupe aryle, aryloxy, aralkyle ou aralkyloxy portant éventuellement chacun un ou plusieurs substituants identiques ou différents sur la partie aryle, contenant chacun 6 à 10 atomes de carbone dans les parties aryles et le cas échéant 1 à 3 atomes de carbone dans les parties alkyles à chaîne droite ou ramifiée, les substituants des groupes aryles étant: des halogènes, des groupes cyano, nitro, des groupes alkyle, alcoxy, alkylthio ou halogénoalkyle, chacun à chaîne droite ou ramifiée et contenant chacun 1 à 4 atomes de carbone et, dans le cas des groupes halogénoalkyles, 1 à 9 atomes d'halogènes identiques ou différents,

X représente l'oxygène ou le soufre et

Ar représente un groupe phényle, 2-pyridyle, 3-pyridyle ou 4-pyridyle portant chacun éventuellement un ou plusieurs substituants identiques ou différents, les substituants en question étant: des groupes cyano, nitro, des halogènes, des groupes alkyle, alcoxy ou alcoxycarronyle chacun à chaîne droite ou ramifiée et contenant chacun 1 à 4 atomes de carbone dans la partie alkyle, des groupes halogénoalkyles ou halogénoalcoxy chacun à chaîne droite ou ramifiée et contenant chacun 1 à 4 atomes de carbone et 1 à 9 atomes d'halogènes identiques ou différents, ou le groupe $-S(O)_n-R^4$, dans lequel

$R^4$ représente un groupe amino, un groupe alkyle, alkylamino, dialkylamino ou halogénoalkyle, chacun à chaîne droite ou ramifiée et contenant chacun 1 à 4 atomes de carbone dans les parties alkyles et, dans le cas des groupes halogénoalkyles, 1 à 9 atomes d'halogènes identiques ou différents et n'est égal à 0,1 ou 2, et leurs sels de métaux alcalins.

2. 5-amino-1-aryl-pyrazoles substitués de formule (I) selon la revendication 1, dans lesquels

R représente l'hydrogène, un groupe cyano, nitro, méthoxycarbonyle ou éthoxycarbonyle,

$R^1$ représente l'hydrogène, un groupe méthyle, éthyle, n- ou isopropyle, ou n-, iso- ou sec-butyle,

$R^2$ et $R^3$ représentent chacun, indépendamment l'un de l'autre, un groupe méthyle, éthyle, n- ou iso-propyle, n-, iso-, sec- ou tertbutyle, allyle, propargyle, chlorométhyle, dichlorométyle, trichlorométhyle, fluorométhyle, dichlorofluorométhyle, trifluorométhyle, dichlorofluorométhyle, difluorochlorométhyle, chloréthyle, trichloréthyl, pentachloréthyle, trifluoréthyle, pentafluoréthyle, brométhyle, méthoxyméthyle, méthoxyéthyle, éthoxyméthyle, éthoxyéthyle, n-propoxymétyle, iso-propoxyméthyle, n-propoxyéthyle, iso-propoxyéthyle, méthoxy, éthoxy, n- ou iso-propoxy, n-, iso, sec-, ou tert-butoxy, cyclopropyle, cyclopentyle, cyclohexyle, cyclohexyloxy ou un groupe benzyle, benzyloxy, phényle ou phénoxy portant chacun le cas échéant 1 à 5 substituants identiques ou différents, les susbtituants de la partie aryle en question étant dans chaque cas: le fluor, le chlore, le brome, des groupes cyano, nitro, méthyle, éthyle méthoxy, méthylthio ou trifluorométhyle, X représente l'oxygène ou le souffre et

Ar représente un groupe phényle portant éventuellement 1 à 5 substituants identiques ou différents ou un groupe 2-pyridyle portant éventuellement 1 à 4 substituants identiques ou différents, les substituants en question étant: des groupes cyano, nitro, le fluor, le chlore, le brome, l'iode, des groupes méthyle, éthyle, n- et iso-propyle, n-, iso-, sec- et tert-butyle, méthoxy, éthoxy, méthoxycarbonyle, éthoxycarbonyle, trifluorométhyle, trichlorométhyle, dichlorofluorométhyle, difluorochlorométhyle, chlorométhyle, dichlorométhyle, difluorométhyle, pentafluoréthyle, tétrafluoréthyle, trifluorochloréthyle, trifluoréthyle, difluorodichloréthyle, trifluorodichloréthyle, pentachloréthyle, trifluorométhoxy, trichlorométhoxy, dichlorofluorométhoxy, difluorochlorométhoxy, chlorométhoxy, dichlorométhoxy, difluorométhoxy, pentafluoréthoxy, tétrafluoréthoxy, trifluorochloréthoxy, trifluoréthoxy, difluorodichloréthoxy, trifluorodichloréthoxy, pentachloréthoxy ou le groupe $-S(O)_n-R^4$ dans lequel

$R^4$ représente un groupe amino, méthylamino, éthylamino, diméthylamino diéthylamino, fluorodichlorométhyle, difluorométhyle, tétrafluoréthyle, trichloréthyle, trifluorométhyle, méthyle ou éthyle et n est égal à 0, 1 ou 2.

3. Procédé de préparation des 5-amino-1-aryl-pyrazoles substitués de formule (I),

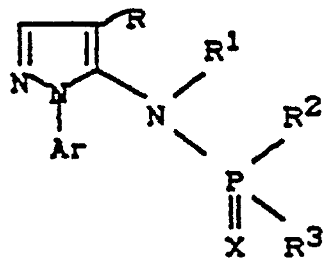

(I)

dans laquelle

R représente l'hydrogène, un groupe cyano, nitro ou un groupe alcoxycarbonyle à chaîne droite ou ramifiée en $C_1$–$C_4$,

$R^1$ représente l'hydrogène ou un groupe alkyle à chaîne droite ou ramifiée en $C_1$–$C_6$,

$R^2$ et $R^3$ représentent chacun, indépendamment l'un de l'autre, un groupe alkyle, alcényle ou alcynyle chacun à chaîne droite ou ramifiée et contenant chacun jusqu'à 8 atomes de carbone, un groupe halogénoalkyle à chaîne droite ou ramifiée contenant 1 à 6 atomes de carbone et 1 à 13 atomes d'halogènes identiques ou différents, un groupe alcoxyalkyle à chaîne droite ou ramifiée contenant 1 à 4 atomes de carbone dans chacune des parties alkyles, un groupe alcoxy à chaîne droite ou ramifiée en $C_1$–$C_6$, un groupe cycloalkyle ou cycloalkyloxy contenant chacun 3 à 7 atomes de carbone, ou un groupe aryle, aryloxy, aralkyle ou aralkyloxy portant chacun le cas échéant un ou plusieurs substituants identiques ou différents dans la partie aryle et contenant chacun 6 à 10 atomes de carbone dans les parties aryles et le cas échéant 1 à 3 atomes de carbone dans les parties alkyles à chaîne droite ou ramifiée, les substituants des parties aryles étant: des halogènes, des groupes cyano, nitro, des groupes alkyles, alcoxy, alkylthio ou halogénoalkyles à chaîne droite ou ramifiée contenant chacun 1 à 4 atomes de carbone et, dans le cas des groupes halogénoalkyles, 1 à 9 atomes d'halogènes identiques ou différents,

X représente l'oxygène ou le soufre et

Ar représente un groupe phényle, 2-pyridyle, 3-pyridyle, ou 4-pyridyle portant chacun le cas échéant un ou plusieurs susbtituants identiques ou différents, les substituants en question étant: des groupes cyano, nitro, des halogènes, des groupes alkyle, alcoxy ou alcoxycarbonyle chacun à chaîne droite ou ramifiée et contenant chacun 1 à 4 atomes de carbone dans la partie alkyle, des groupes halogénoalkyle ou halogénoalcoxy chacun à chaîne droite ou ramifiée et contenant chacun 1 à 4 atomes de carbone et 1 à 9 atomes d'halogènes identiques ou différents, ou le groupe $-S(O)_n-R^4$, dans lequel

$R^4$ représente un groupe amino, un groupe alkyle, alkylamino, dialkylamino ou halogénoalkyle, chacun à chaîne droite ou ramifiée et contenant chacun 1 à 4 atomes de carbone dans les diverses parties alkyles et, dans le cas des groupes halogénoalkyles, 1 à 9 atomes d'halogènes identiques ou différents et n est égal à 0, 1 ou 2, caractérisé en ce que

A) on fait réagir des 5-amino-1-aryl-prazoles de formule (II),

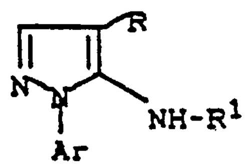

(II)

dans laquelle

R, $R^1$ et Ar ont les significations indiquées ci-dessus, avec des halogénures de phosphore de formule (III),

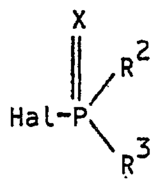

(III)

dans laquelle

$R^2$, $R^3$ et X ont les significations indiquées ci-dessus et Hal représente un halogène, éventuellement en présence d'un diluant et éventuellement en présence d'un accepteur d'acide; ou bien

B) on obtient les 5-amino-1-aryl-pyrazoles substitués de formule (Ia),

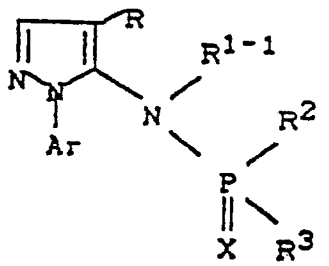

(Ia)

dans laquelle
R, $R^2$, $R^3$, X et Ar ont les significations indiquées ci-dessus et $R^{1-1}$ représente un groupe alkyle à chaîne droite ou ramifiée en $C_1$–$C_6$, en faisant réagir des 5-amino-1-aryl-pyrazoles substitués de formule (Ib)

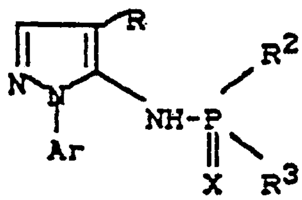

(Ib)

dans laquelle
R, $R^2$, $R^3$, X et Ar ont les significations indiquées ci-dessus, qu'on peut obtenir par le procédé A), avec des agents alkylants de formule (IV),

$R^{1-1}$–A (IV)

dans laquelle
$R^{1-1}$ représente un groupe alkyle à chaîne droite ou ramifiée en $C_1$–$C_6$ et
A représente un halogène ou un groupe alkylsulfonyloxy, alcoxysulfonyloxy ou arysulfonyloxy, chacun éventuellement substitué, éventuellement en présence d'un diluant, éventuellement en présence d'un accepteur d'acide et éventuellement en présence d'un catalyseur; ou bien
C) on obtient les 4-nitro-1-aryl-pyrazoles de formule (Ic),

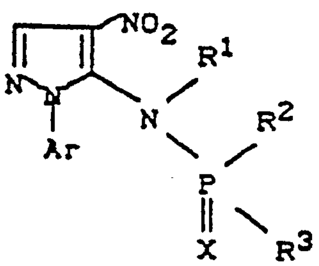

(Ic)

dans laquelle
$R^1$, $R^2$, $R^3$, Ar et X ont les significations indiquées ci-dessus, en faisant réagir les 1-aryl-pyrazoles non substitués en position 4, répondant à la formule (Id),

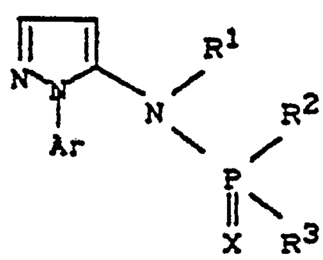

(Id)

dans laquelle
$R^1$, $R^2$, $R^3$, X et Ar ont les significations indiquées ci-dessus, qu'on peut obtenir par le procédé A) ou B), avec l'aide nitrique, éventuellement en présence d'un diluant et éventuellement en présence d'un catalyseur, ou bien on obtient les sels de métaux alcalins en faisant réagir les 5-amino-1aryl-pyrazoles de formule (I), dans laquelle $R^1$ représente l'hydrogène, avec un sel minéral de métal alcalin.

4. Produit herbicide, caractérisé en ce qu'il contient au moins un 5-amino-1-aryl-pyrazole substitué de

formule (I) selon les revendications 1 à 3.

5. Procédé pour combattre les mauvaises herbes, caractérisé en ce que l'on fait réagir des 5-amino-1-aryl-pyrazoles substitués de formule (I), selon les revendications 1 à 3, sur les mauvaises herbes et/ou leur habitat.

6. Utilisation des 5-amino-1-aryl-pyrazoles substitués de formule (I), selon les revendications 1 à 3, pour la lutte contre les mauvaises herbes.

7. Procédé de préparation de produits herbicides, caractérisé en ce que l'on mélange des 5-amino-1-aryl-pyrazoles substitués de formule (I), selon les revendications 1 à 3, avec des diluants et/ou des agents tensioactifs.

8. Le composé de formule